# FASCICULE DE BREVET EUROPEEN

(11) **EP 2 633 440 B1**
(45) Date de publication et mention de la délivrance du brevet: **05.12.2018**
(21) Numéro de dépôt: 11787925.4
(22) Date de dépôt: 26.10.2011
(51) Int. Cl.: G06F 17/30

(54) **INDEXATION ET EXECUTION D'APPLICATIONS LOGICIELLES DANS UN RESEAU**
INDEXIERUNG UND AUSFÜHREN VON SOFTWAREANWENDUNGEN IN EINEM NETZWERK
INDEXING AND EXECUTION OF SOFTWARE APPLICATIONS IN A NETWORK

(30) Priorité: 27.10.2010 FR 1058862
(43) Date de publication de la demande: 04.09.2013
(73) Titulaire: Orange, 75015 Paris (FR)
(72) Inventeur: AGRO, Roberto, 92340 Bourg La Reine (FR); PIEGAY, Romain, 75005 Paris (FR)
(74) Mandataire: Vidon Brevets & Stratégie
(86) Numéro de dépôt international: PCT/FR2011/052497
(87) Numéro de publication internationale: WO 2012/056169

(56) Documents cités:
- WO-A1-01/28181
- FR-A1- 2 820 926
- US-A1- 2005 278 518
- US-A1- 2006 179 079
- US-A1- 2009 154 556
- US-B1- 6 314 565
- FOUT T: "Universal Plug ans Play (UPnP) Client Support", INTERNET CITATION, août 2001 (2001-08), XP002299993, Extrait de l'Internet: URL:http://www.microsoft.com/technet/itsol utions/network/plan/insidenet/s ohonet/upnpsup.mspx [extrait le 2004-10-06]

## Description

Le domaine de l'invention est celui de la gestion des applications logicielles sur un réseau.

Plus précisément, l'invention s'applique à la distribution et à l'exécution d'applications logicielles sur différents équipements d'un réseau.

De manière connue, le standard UPnP (de l'anglais « *Universal Plug and Play* ») / DLNA (de l'anglais « *Digital Living Network Alliance* ») est utilisé pour mettre en relation des dispositifs implantés dans différents équipements d'un réseau local, notamment pour partager et restituer des contenus multimédias : images, contenus audio, contenus vidéo.

Dans le contexte de ce document, un dispositif est dit dispositif UPnP s'il est conforme au standard UPnP ou à un autre standard équivalent ou dérivé, (par exemple le standard DLNA), notamment s'il utilise un protocole de commande conforme à un tel standard. Un tel dispositif comprend au moins une entité UPnP / DLNA (appelée "device" dans le standard UPnP / DLNA) et/ou met en oeuvre au moins un service défini dans le standard UPnP / DLNA.

### Art antérieur

Le standard UPNP / DLNA s'impose comme un standard pour le partage, la diffusion et le contrôle des contenus multimédias numériques.

Plus précisément, le standard UPnP est un protocole qui permet de relier simplement plusieurs ordinateurs et autres équipements informatiques entre eux, qui sont alors dénommés dispositifs UPnP. Ce standard est promulgué par l'UPnP Forum (http://www.upnp.org/). L'envoi de commandes UPnP, permettant de faire communiquer les dispositifs UPnP entre eux (ces commandes sont appelées action UPnP) et d'exercer un contrôle sur certains dispositifs UPnP du réseau, est notamment basé sur les protocoles TCP/IP, UDP et HTTP. Des messages SSDP (Simple Service Discovery Protocol) permettent de découvrir des équipements et les services disponibles sur un réseau et fonctionnent quelque soit le système d'exploitation du dispositif UPnP.

Ainsi, le standard UPnP permet un partage aisé des contenus numériques tels que des photographies, des films ou de la musique au sein d'un réseau.

Cependant, à l'heure actuelle, les inventeurs ont constaté qu'il n'existe pas de mécanisme simple et comparable, permettant de distribuer et/ou d'exécuter des applications logicielles, par exemple des applications logicielles interactives de type jeu vidéo sur différents équipements du réseau.

Le document US2006/179079A1 divulgue une méthode de transmission d'applications entre un premier dispositif à un deuxième dispositif, par l'intermédiaire d'un terminal mobile qui joue le rôle de passerelle de stockage et de transport de l'application.

### Exposé de l'invention

L'invention concerne selon un premier aspect un procédé de gestion d'au moins une application logicielle, mis en oeuvre par un serveur de contenus multimédias (DMS), comprenant :
- une phase d'indexation, dans une base de données d'indexation de contenus, d'au moins une application logicielle en tant que contenu, par enregistrement de métadonnées indiquant que ledit contenu ainsi indexé est une application logicielle et enregistrement d'une adresse de localisation d'un fichier de données comprenant un module logiciel conçu pour exécuter ladite au moins une application logicielle ;
- une phase de transmission desdites métadonnées et de ladite adresse de localisation à un dispositif de pilotage (DMC), servant à sélectionner une application logicielle indexée à restituer et à piloter la restitution de l'application logicielle sélectionnée.

Ainsi dans un contexte UPnP, l'invention permet de gérer une application comme tout autre contenu multimédia. Cette gestion est rendue possible grâce à l'enregistrement de métadonnées associées aux applications, comme s'il s'agissait de contenus classiques. Cette gestion est également possible du fait de l'enregistrement de la localisation d'un module logiciel conçu pour exécuter l'application, module sans lequel l'application ne pourrait pas être mise en oeuvre. La transmission des métadonnées associées aux applications et des adresses de localisation des modules logiciels au dispositif de pilotage (DMC) permet à celui-ci de mettre en oeuvre l'application logicielle de la même manière que pour les contenus classiques.

Selon un mode de réalisation particulier, le procédé comprend une phase de transmission, à au moins un dispositif de restitution de contenus multimédias (DMR) sur lequel un contenu indexé est à restituer, dudit module logiciel lorsque le contenu indexé est une application logicielle.

Ainsi, lorsque la sélection de l'application logicielle a été réalisée par le DMC, cette application logicielle est exécutée par le dispositif de restitution DMR, après que le module logiciel ait été transmis au dispositif de restitution DMR. Ceci permet au dispositif de restitution de disposer de tous les éléments nécessaires à l'exécution de l'application.

Selon cet aspect de l'invention, le dispositif de restitution de contenus multimédias dispose d'une flexibilité accrue du fait qu'il ne lui est pas nécessaire de posséder au préalable le module logiciel associé à l'application logicielle à restituer.

Selon un mode de réalisation, lesdites métadonnées comprennent une identification d'une classe de contenus à laquelle appartient ladite application logicielle, ladite classe de contenus étant propre à des contenus qui sont des applications logicielles.

Ainsi, l'invention propose une indexation spécifique d'applications logicielles, en utilisant une nouvelle classe de contenus relatifs aux applications logicielles, en sus des classes connues telles que celles dédiées spécifiquement à la musique, les photos ou la vidéo.

Les métadonnées comprennent une identification de la classe d'appartenance de l'objet indexé, en l'occurrence de la nouvelle classe d'objet "applications logicielles" dédiée aux applications logicielles.

Les métadonnées identifiant cette classe spécifique aux applications logicielles comprennent notamment des données descriptives du ou des modules logiciel(s) associé(s) à chaque application logicielle.

Par exemple, lesdites métadonnées comprennent au moins une information appartenant au groupe comprenant :
- une version d'un moteur d'exécution dudit module logiciel;
- une liste d'au moins un périphérique requis pour l'exécution de ladite application logicielle;
- une liste d'au moins un périphérique optionnel pour l'exécution de ladite application logicielle;
- une information sur un degré d'expertise attendu pour un utilisateur de ladite application logicielle;
- une information sur un système d'exploitation requis pour l'exécution de ladite application logicielle;
- une information sur un moteur d'exécution requis pour l'exécution de ladite application logicielle.

Ces métadonnées respectivement relatives à un contenu, un environnement d'exécution et à la localisation d'un moteur d'exécution, permettent en outre une gestion indépendante des informations relative à une application logicielle donnée. Cette gestion indépendante permet notamment d'optimiser les ressources d'un réseau domestique. En effet, dans le cas particulier où certains développeurs d'applications logicielles choisissent de développer un moteur d'exécution suffisamment générique, non spécifique à une application logicielle précise, il est donc possible d'adresser et d'indexer la localisation d'un même moteur d'exécution pour des applications logicielles différentes.

Selon un mode de réalisation particulier, le serveur de contenus multimédia est un serveur de contenus multimédias UPnP et ladite classe est une classe dérivée de la classe UPnP nommée *"object.item*".

Selon ce mode de réalisation particulier, l'indexation spécifique mise en oeuvre par l'invention permettant l'indexation d'objets qui ne sont pas des contenus multimédias mais des applications logicielles, est par ailleurs adaptée afin d'être comprise d'un serveur de contenus multimédia UPnP. En effet, cette indexation met en oeuvre une classe dérivée de la classe UPnP nommée "object.item" par exemple : object.item.applicationItem et contient des métadonnées propres à une application logicielle.

Selon un autre mode de réalisation particulier le serveur de contenus multimédia est un serveur de contenus multimédias UPnP et ladite classe est une classe dérivée de la classe UPnP nommée *"object.container".*

Ainsi, selon cet autre mode de réalisation particulier, la phase d'indexation met en oeuvre une classe dérivée de la classe UPnP de type "object.container" définissant un container c'est-à-dire un ensemble de plusieurs contenus multimédias, par exemple : object.container.applicationItem et contient des métadonnées propres à une application logicielle.

Avantageusement, ladite phase d'indexation comprend une étape de détermination et d'enregistrement d'au moins une métadonnée représentative d'une localisation et/ou d'un identifiant d'au moins un contenu multimédia utilisé par ladite application logicielle lors de son exécution.

Grâce à cette étape de détermination et d'enregistrement d'au moins une métadonnée représentative d'une localisation et/ou d'un identifiant d'au moins un contenu multimédia (images, vidéo, sons...), il est donc possible de lister et de rassembler l'ensemble des contenus appelés par une application logicielle au cours de son exécution. Cette étape permet donc d'augmenter la rapidité d'exécution d'une application logicielle, du fait que le dispositif de restitution n'a pas à rechercher les contenus appelés lors de la restitution de l'application logicielle, leurs localisations ayant été préalablement établies et stockées par le serveur de contenus multimédias.

Avantageusement, ladite phase d'indexation comprend en outre une étape de détermination et d'enregistrement d'au moins une métadonnée représentative d'une localisation et/ou d'un identifiant d'un moteur d'exécution associé à ladite application logicielle, lorsque ledit module logiciel nécessite d'être exécuté par un moteur d'exécution.

La présente invention introduit ainsi la possibilité de distribuer indépendamment à un dispositif de restitution connecté au réseau domestique un moteur d'exécution spécifique au module logiciel d'une application logicielle dans la mesure où celui-ci ne le possède pas.

Ainsi, le procédé permet un stockage « allégé » d'une application logicielle au sein d'un serveur de contenus multimédias. En effet, l'indexation du moteur d'exécution associé à une application logicielle, ne nécessite pas la présence physique du moteur d'exécution sur le serveur de contenus multimédias, mais détermine et enregistre une métadonnée représentative d'une localisation du moteur d'exécution. Il est ainsi possible que le moteur d'exécution désiré soit physiquement absent du serveur de contenus multimédias, mais disponible auprès d'un dispositif accessible à partir du réseau.

L'invention permet donc d'optimiser la répartition des applications logicielles sur un ensemble de dispositifs connectés constamment ou non à un réseau, par exemple un réseau domestique.

Avantageusement, le procédé de gestion d'une application logicielle selon l'invention comprend en outre une phase de mise à jour de ladite base de données d'indexation lorsqu'une nouvelle version d'application logicielle, ou une nouvelle application logicielle est détectée.

Ainsi, il est possible de prendre en compte une nouvelle version d'une application logicielle. Par exemple, le procédé créé une nouvelle métadonnée représentative d'une localisation de la dernière version de moteur d'exécution associé à une application logicielle. Selon un paramétrage prédéterminé, il est possible de hiérarchiser le versionnage des métadonnées d'une application logicielle, par exemple en fonction de l'environnement d'exécution associé à chaque version.

Selon un deuxième aspect, l'invention concerne également un procédé de pilotage, mis en oeuvre par un dispositif de pilotage (DMC), caractérisé en ce qu'il comprend :
- une étape d'obtention, auprès d'un serveur de contenus multimédia, de métadonnées d'au moins un contenu indexé dans une base de données d'indexation de contenus et d'une adresse de localisation d'au moins un fichier de données associé audit contenu indexé;
- une étape de transmission, à un dispositif de restitution de contenus multimédia, de métadonnées, de ladite adresse de localisation et d'une commande de restitution d'au moins un contenu indexé,
ladite commande de restitution étant destinée à déclencher, lorsque lesdites métadonnées indiquent que ledit au moins un contenu indexé est une application logicielle, une exécution de ladite application logicielle au moyen d'un module logiciel encodé dans ledit fichier de données.

Ainsi, le pilotage est réellement optimisé du fait qu'il consiste à traiter spécifiquement une application logicielle aussi simplement qu'un contenu multimédia classique de type audio ou vidéo.

La présente invention permet en effet de faire évoluer les capacités de pilotage d'un dispositif de pilotage (DMC) en permettant le traitement d'un nouveau type d'objets qui ne sont pas des contenus multimédias mais des applications logicielles.

L'application logicielle est en effet identifiée en tant qu'objet multimédia par un ensemble de métadonnées d'indexation susceptible d'être obtenu auprès du serveur.

En traitant ces métadonnées spécifiques, le dispositif de pilotage (DMC) envoie à un dispositif de restitution de contenus multimédia (DMR) des métadonnées (M_{AS}) de contenus indexés, d'adresses de localisation de fichiers de données associés aux contenus indexés et d'une commande de restitution dudit contenu indexé.

En particulier, lorsque les métadonnées obtenues indiquent que le contenu indexé est une application logicielle, la commande de restitution est telle qu'elle déclenche, une exécution de l'application logicielle au moyen d'un module logiciel indiqué dans le fichier de données associé.

Selon un mode de réalisation, le procédé de pilotage comprend une étape de vérification de la compatibilité du dispositif de restitution avec ledit contenu indexé, à partir d'une information sur un environnement d'exécution dudit dispositif de restitution (DMR) et d'une information représentative d'au moins un périphérique dudit dispositif de restitution (DMR).

Ainsi, les capacités de vérifications et de contrôle de compatibilités entre un dispositif de restitution et un contenu indexé sont étendues pour s'assurer que le dispositif de restitution est en mesure de restituer un contenu correspondant à une application logicielle.

Selon un mode de réalisation, le procédé de pilotage comprend:
- une première étape de vérification d'une compatibilité environnementale entre :
   - une métadonnée représentative d'un environnement d'exécution dudit contenu multimédia sélectionné, et
   - ladite au moins une information sur un environnement d'exécution dudit au moins un dispositif de restitution (DMR),
- une deuxième étape de vérification d'une compatibilité matérielle entre :
   - une métadonnée représentative de périphériques utilisés par ladite application logicielle ;
   - ladite au moins une information représentative des périphériques préalablement obtenue.

Ainsi, en plus de la vérification classique des formats/protocoles, le dispositif de pilotage effectue d'autres vérifications de compatibilité du dispositif de restitution du dispositif que l'utilisateur souhaite utiliser, relatives notamment à l'environnement et à la présence des périphériques requis par l'application logicielle à restituer. Le dispositif de pilotage vérifie cette compatibilité en comparant par exemple les métadonnées de l'application logicielle aux capacités de restitution du dispositif de restitution.

Selon un troisième aspect, l'invention concerne également un procédé de restitution, mis en oeuvre par un dispositif de restitution (DMR) de contenus multimédia, caractérisé en ce qu'il comprend :
- une étape de réception d'une adresse de localisation, de métadonnées et d'une commande de restitution d'un contenu indexé dans une base de données d'indexation de contenus multimédia, et, en réponse à ladite commande de restitution, lorsque lesdites métadonnées indiquent que le contenu indexé est une application logicielle,
- une étape de téléchargement d'un module logiciel à ladite adresse de localisation et de déclenchement de l'exécution de ladite application logicielle au moyen dudit module logiciel.

Ainsi, l'invention permet la restitution des applications logicielles aussi simplement qu'un contenu multimédia classique de type audio ou vidéo.

L'obtention du module logiciel est avantageuse du fait qu'elle ne mobilise pas des ressources de réception importante au sein du dispositif de restitution puisque celui-ci reçoit une donnée représentative d'une localisation du module logiciel de taille relativement faible.

Par ailleurs, chaque dispositif est capable de différer ou non le téléchargement physique du module logiciel.

Selon un mode de réalisation, le procédé de restitution d'une application logicielle comprend, lorsque ledit module logiciel requiert un moteur d'exécution:
- une étape de vérification d'une présence, dans l'équipement mettant en oeuvre ledit dispositif de restitution (DMR), d'un moteur d'exécution dudit module logiciel;
- une étape d'obtention dudit moteur d'exécution lorsque que ledit moteur d'exécution est absent.

Ainsi, la flexibilité de fonctionnement du dispositif de restitution est accrue. En effet, il est possible de supprimer ou de télécharger indépendamment le moteur d'exécution d'une application logicielle. Par exemple, pour un « smartphone », ou téléphone mobile intelligent, le procédé permet une libération partielle et indépendante de mémoire d'au moins un moteur d'exécution nécessaire pour l'exécution du module logiciel d'une application logicielle. Le dispositif de restitution sera en effet apte à localiser ultérieurement et télécharger le moteur d'exécution au moment où l'exécution de l'application logicielle sera requise par un utilisateur.

En outre, dans le cas particulier où certains développeurs d'applications logicielles choisissent de développer un moteur d'exécution suffisamment générique, il est possible de ne télécharger du réseau domestique que les contenus (images, sons...) appelés par l'application logicielle, si le moteur d'exécution de l'application logicielle est déjà présent sur le dispositif de restitution que l'utilisateur souhaite utiliser.

L'invention concerne également un serveur de contenus multimédias (DMS), comprenant :
- des moyens d'indexation, dans une base de données d'indexation de contenus, d'au moins une application logicielle en tant que contenu, par enregistrement de métadonnées indiquant que ledit contenu ainsi indexé est une application logicielle et enregistrement d'une adresse de localisation d'un module logiciel conçu pour exécuter ladite au moins une application logicielle ;
- des moyens de transmission desdites métadonnées et de ladite adresse de localisation à un dispositif de pilotage (DMC), servant à sélectionner un contenu indexé à restituer et à piloter la restitution d'un contenu sélectionné.

L'invention concerne également un dispositif de pilotage (DMC) conçu pour le pilotage de dispositifs de restitution, comprenant :
- des moyens d'obtention, auprès d'un serveur de contenus multimédia, de métadonnées d'au moins un contenu indexé dans une base de données d'indexation de contenus et d'une adresse de localisation d'au moins un fichier de données associé audit contenu indexé;
- des moyens de transmission, à un dispositif de restitution de contenus multimédia, de métadonnées, de ladite adresse de localisation et d'une commande de restitution dudit contenu indexé, ladite commande de restitution étant destinée à déclencher, lorsque lesdites métadonnées indiquent que ledit contenu indexé est une application logicielle, une exécution de ladite application logicielle au moyen d'un module logiciel encodé dans ledit fichier de données.

L'invention concerne également un dispositif de restitution (DMR) de contenus multimédia, comprenant :
- des moyens de réception d'une commande de restitution d'un contenu indexé dans une base de données d'indexation de contenus multimédia, d'une adresse de localisation d'un fichier de données associé audit contenu indexé et de métadonnées dudit contenu indexé,
- des moyens pour, en réponse à ladite commande de restitution, lorsque lesdites métadonnées indiquent que le contenu indexé est une application logicielle, télécharger à ladite adresse de localisation un module logiciel et déclencher l'exécution de ladite application logicielle au moyen dudit module logiciel.

### Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un exemple de structure simplifiée d'un serveur de contenus multimédias ;
- la figure 2 illustre un exemple de structure simplifiée d'un dispositif de pilotage d'une application logicielle ;
- la figure 3 illustre un exemple de structure simplifiée d'un dispositif de restitution 422 d'une application logicielle ;
- la figure 4, illustre un exemple de représentation de l'architecture *UPnP AV* ;
- les figures 5 présente les principales phases et étapes du procédé de gestion de données d'indexation d'une application logicielle selon un mode de réalisation ;
- la figure 6 présente les principales étapes du procédé de sélection d'une application logicielle et de sélection du dispositif de restitution 422 de ladite application logicielle selon un mode de réalisation ;
- la figure 7 présente les principales étapes du procédé de restitution d'une application logicielle selon un mode de réalisation ;
- la figure 8 illustre un exemple de diagramme de séquence d'un système de gestion d'une application logicielle selon un mode de réalisation.

### Description d'un mode de réalisation

### Principe général

Le principe général de l'invention repose sur l'indexation spécifique, la sélection et la restitution d'applications logicielles au sein d'un réseau, par utilisation de dispositifs UPnP d'un réseau.

L'invention propose un mécanisme de gestion d'applications logicielles au sein d'un réseau UPnP mettant en oeuvre des dispositifs UPnP : cette gestion d'applications logicielles implique des modifications des mécanismes d'indexation, de sélection et de restitution de contenus tels que définis dans le standard UPnP, mécanismes qui sont prévus pour être appliqués à des contenus multimédia classiques de type audio et/ou vidéo. Ces mécanismes standards UPnP sont rappelés ci-dessous.

La gestion d'applications logicielles selon l'invention permet de limiter les ressources nécessaires pour exécuter une application logicielle, par utilisation, pour cette exécution, des dispositifs UPnP présents dans le réseau pour la gestion de contenus multimédias.

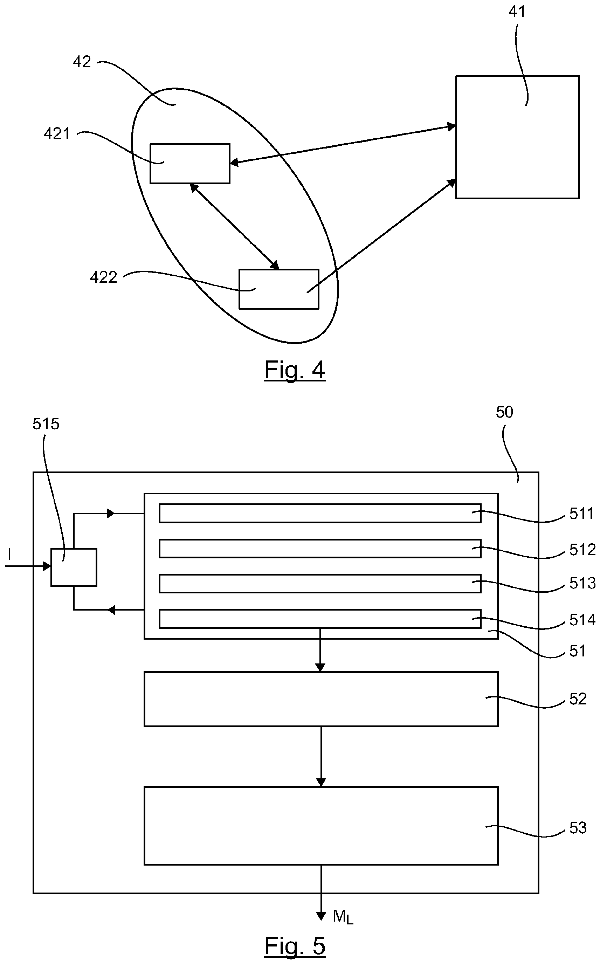

L'architecture UPnP AV / DLNA (de l'anglais « *UPnP Audio and Video* ») représentée en relation avec la figure 4, fait intervenir trois types d'entités dans un réseau pour la gestion des contenus audio, vidéo et photographique :
- le serveur de contenus multimédias 41 (en abrégé DMS, de l'anglais « digital *media server* ») : c'est un dispositif UPnP qui partage ses contenus multimédias (comme l'audio, la vidéo ou des images) avec d'autres dispositifs UPnP du réseau ;
- le dispositif de pilotage 421, nommé également "point de contrôle" UPnP (en abrégé CP, de l'anglais « *control point* » ou DMC, "digital média controller") : une entité qui peut détecter les dispositifs UPnP et leurs services, recevoir des événements de ces dispositifs et les commander en leur envoyant des commandes UPnP (nommées actions) ;
- le dispositif de restitution 422 (en abrégé DMR de l'anglais « digital *media renderer* ») : dispositif « esclave », en charge de la restitution d'un contenu sur un périphérique de l'équipement intégrant ce dispositif de restitution 422 (par exemple, télé, chaîne HiFi, ...).

L'ensemble fonctionnel constitué du "point de contrôle" DMC et du dispositif de restitution 422 DMR est appelé lecteur média UPnP 42 (en abrégé, DMP, de l'anglais « digital *media player* ») et constitue un deuxième type de dispositif de restitution 422. Parmi les lecteurs média numérique les plus répandus, on peut notamment citer les consoles de jeux comme la PS3™ ou la XBox 360™ et les télévisions connectables, à un réseau, par exemple à un réseau domestique de leur propriétaire.

Chacun de ces dispositifs implémente des services spécifiés par UPnP. En particulier, un dispositif de restitution 422 met en oeuvre un service de gestion de connexion (appelé en anglais « *ConnectionManager* » dans le standard UPnP), de contrôle de restitution (appelé en anglais « *RenderingControl* » dans le standard UPnP), un service de restitution (appelé en anglais « *AVTransport* » dans le standard UPnP).

Selon le standard UPnP, le scénario de restitution d'un contenu multimédia classique (images, textures, modèles 3D, textes, musiques etc) est le suivant :
- le point de contrôle UPnP obtient l'adresse de localisation d'un contenu multimédia à restituer, c'est-à-dire l'adresse de localisation d'un fichier de données comprenant/encodant les données de ce contenu multimédia, en interrogeant le serveur de contenus multimédias UPnP, doté d'une base de données d'indexation de contenus multimédias sous forme de répertoire de contenus multimédias (nommé en anglais « *Content Directory Service* » dans le standard UPnP) ;
- le point de contrôle UPnP spécifie au dispositif de restitution 422 UPnP sélectionné l'adresse de localisation du contenu multimédia en utilisant l'action *"SetAVTransportURI"* du service "AVTransport" du dispositif de restitution 422 UPnP ;
- le point de contrôle UPnP déclenche la restitution du contenu multimédia en invoquant l'action de restitution "PLAY" du service "AVTransport" du dispositif de restitution 422 UPnP ;
- le dispositif de restitution 422 obtient le contenu multimédia proprement dit par émission d'une requête HTTP "GET" à destination de l'entité désignée dans l'adresse de localisation du contenu multimédia envoyée au moyen de l'action *"SetAVTransportURI".*

Dans le standard UPnP, lorsque le dispositif de restitution 422 choisi est de type DMR, on parle d'un modèle à trois boîtes, car trois dispositifs UPnP distincts doivent intervenir pour la mise en oeuvre de la restitution d'un contenu multimédia (DMS + DMC + DMR). Lorsque le dispositif de restitution 422 choisi est de type DMP, on parle d'un modèle à deux boîtes, car deux dispositifs UPnP distincts doivent intervenir pour la mise en oeuvre de la restitution d'un contenu multimédia (DMS et DMP), le DMP cumulant, dans ce modèle à deux boites, les fonctions du DMC et du DMR.

Ces trois entités UPnP sont modifiées pour la mise en oeuvre de l'invention, le scénario de restitution d'un contenu multimédia classique étant adapté pour prendre en compte les spécificités d'un contenu appartenant à la classe "Application logicielle". Les modifications apportées à chacune de ces entités sont décrites ci-dessous.

### Serveur de contenus multimédias 41

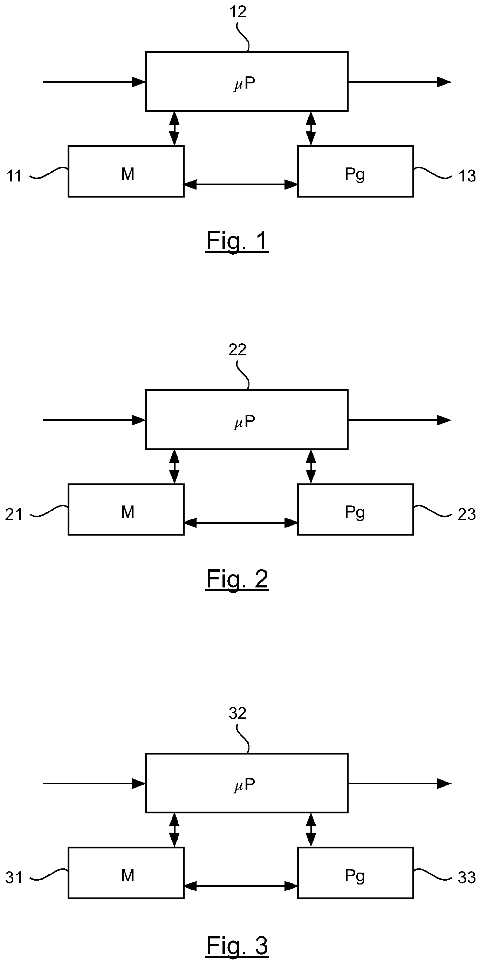

La figure 1 illustre un exemple de structure simplifiée du serveur de contenus multimédias 41 selon un mode de réalisation de l'invention.

Par exemple, le serveur de contenus multimédias comprend une mémoire 11 constituée d'une mémoire tampon, une unité de traitement 12, équipée par exemple d'un microprocesseur, et pilotée par le programme d'ordinateur 13, mettant en oeuvre un procédé d'indexation d'application logicielle selon l'invention.

A l'initialisation, les instructions de code du programme d'ordinateur 13 sont par exemple chargées dans une mémoire avant d'être exécutées par le processeur de l'unité de traitement 12. L'unité de traitement 12 reçoit en entrée au moins une application logicielle à indexer. Le microprocesseur de l'unité de traitement 12 met en oeuvre les étapes du procédé de gestion et d'indexation d'application logicielle décrit ci-dessous, selon les instructions du programme d'ordinateur 13, pour indexer et gérer au moins une application logicielle à un dispositif du réseau auquel le serveur de contenus multimédias est lui-même connecté.

Pour cela, le serveur de contenus multimédias comprend, outre la mémoire tampon 11, des moyens d'indexation, dans une base de données d'indexation, d'au moins une application logicielle en tant que contenu multimédia par enregistrement de métadonnées de cette application logicielle et enregistrement d'au moins un module logiciel conçu pour exécuter la dite au moins une application logicielle, des moyens de transmission à un dispositif de pilotage (DMC) de métadonnées d'un contenu multimédia à restituer sur au moins un dispositif de restitution 422 de contenus multimédias (DMR), des moyens de distribution, à au moins un dispositif de restitution 422 de contenus multimédias (DMR), d'un module logiciel associé à un contenu multimédia sélectionné par ledit dispositif de pilotage (DMC), ledit contenu multimédia sélectionné étant une application logicielle.. Ces moyens sont pilotés par le microprocesseur de l'unité de traitement 12.

Grâce à ces moyens, le serveur de contenus 41 est capable de gérer et d'indexer un nouveau type de contenus: les applications logicielles. La méthode d'indexation mise en oeuvre par le serveur de contenus 41 est détaillée ci-dessous, en rappelant d'abord la méthode d'indexation définie dans le standard UPnP.

### Indexation de contenus par un serveur de contenus multimédias selon le standard UPnP

Comme précisé précédemment, le rôle d'un serveur de contenus multimédias est de partager des contenus multimédias (musique, vidéo, etc.) sur un réseau UPnP. Dans ce but, le serveur de contenus 41 est conçu pour indexer des contenus multimédia. La méthode d'indexation définie dans le standard UPnP est rappelée ici.

Chaque contenu multimédia de type audio, vidéo se caractérise par des données caractéristiques appelées métadonnées stockées dans la base de données d'indexation de contenus multimédias du serveur de contenus multimédias (répertoire de contenus multimédias CDS). Le serveur de contenus multimédias transmet toute ou partie des métadonnées de un ou de plusieurs contenus multimédias au point de contrôle DMC ou au lecteur de media DMP qui le requiert, ces métadonnées comprenant une adresse de localisation (URI, « Uniform Resource Identifier ») utilisable pour émettre une requête d'obtention des données du contenu multimédia proprement dit.

Une fonction importante du serveur de contenus multimédias est l'indexation de ces contenus multimédias pour construire une base de données d'indexation de contenus, interrogeable par les dispositifs UPnP du réseau.

L'indexation d'un serveur de contenus multimédias consiste classiquement à obtenir, pour chaque contenu multimédia à indexer, un ensemble de métadonnées, et à stocker ces métadonnées dans une base de données d'indexation de contenus multimédias en association avec un identifiant de contenu multimédia.

Un exemple de métadonnées caractéristiques d'une photo est reproduit notamment en Annexe 1. Dans un autre exemple, le serveur de contenus multimédias va stocker des métadonnées ID3 pouvant être insérées dans un contenu audio comme MP3, et correspondant à des informations comme le titre, le nom de l'interprète, les commentaires, ou encore la date de sortie du morceau musical. S'agissant d'un contenu image, le serveur de contenus multimédias stocke des métadonnées correspondant aux informations de géolocalisation des images, l'extension et les entêtes des images déterminant leur format (codecs audio et vidéo, résolution, débit, ...).

Ces métadonnées sont pour la plupart spécifiées directement dans le standard UPnP mais peuvent être aussi propriétaires.

La base de données d'indexation de contenu multimédia d'un serveur de contenus multimédias UPnP est accessible via le service UPnP nommé CDS (de l'anglais, "Content Directory Service") et est organisée sous forme d'une arborescence d'objets.

Pour chaque contenu multimédia constituant un objet, un ou plusieurs champs de données sont utilisés pour mémoriser les propriétés de cet objet : ces champs de données constituent les métadonnées de cet objet.

Une des propriétés d'un objet est sa classe d'appartenance. Chaque objet est en effet affecté à une classe d'objet, le nom de cette classe d'objet étant mémorisé dans un champ de données nommé "upnp:class".

Les classes d'objets sont organisées de manière hiérarchisée et arborescente, certaines classes étant dérivées d'autres classes, selon ce qui est usuel en conception orientée objet. La racine de cette arborescence est la classe de base nommée "object". De cette classe de base "object", sont dérivées deux classes principales : d'une part, la classe "object.item", définissant un élément ou un contenu multimédia (morceau de musique et/ou son et/ou séquence vidéo et/ou image et/ou texte, etc), d'autre part, la classe "object.container", définissant un *container* c'est-à-dire un ensemble de plusieurs contenus multimédias.

De la classe "object.item" sont dérivées par exemple les classes "object.item.textItem", définissant un contenu texte, et "object.item.audioItem", définissant un contenu audio.

A chaque contenu multimédia (c'est-à-dire à chaque objet appartenant à la classe "object.item") sont associées une ou plusieurs ressources, définissant chacune un fichier de données de contenu multimédia.

Pour chaque ressource, un ou plusieurs champs de données sont utilisés pour mémoriser les propriétés de cette ressource. Ces champs de données font partie des métadonnées du contenu multimédia associé. Parmi les propriétés d'une ressource, il est connu d'utiliser dans le standard UPnP:
- un identifiant du fichier ou adresse de localisation, mémorisé usuellement sous la forme d'un identifiant URI (de l'anglais « *Uniform Resource Identifier* »), comprenant un identifiant de l'entité du réseau auprès de laquelle ce fichier peut être obtenu, en général une adresse d'un serveur de contenus multimédias DMS;
- un format de codage, un fichier comprenant un contenu audio pouvant par exemple être disponible dans plusieurs formats (compressé MP3 ou non compressé PCM, etc);
- une résolution, lorsque le contenu multimédia est une photo ou un contenu vidéo disponible dans plusieurs résolutions;
- un identifiant du type MIME de codage des données du contenu multimédia codées dans le fichier, par exemple "audio/mpeg";
- un protocole de transport à utiliser pour transporter les données du fichier lors de la restitution du contenu multimédia ("http-get", "rtsp", ...).

Un objet peut avoir plusieurs ressources associées si, par exemple, le serveur de contenus multimédias est capable d'effectuer quelques fonctions de transcodage ou de re-dimensionnement (par exemple, une photo disponible dans différentes résolutions, une piste audio disponible en format compressé MP3 ou non compressé (utilisant une modulation d'impulsion codée PCM)).

### Indexation d'une application logicielle dans un serveur de contenus multimédia UPnP

Dans le contexte de l'invention, il est prévu d'indexer, au moyen du serveur de contenus UPnP 41, un nouveau type de contenus: une application logicielle. Dans ce contexte, une application logicielle est définie comme un objet composite dont les éléments constitutifs sont les suivants :
- au moins un module logiciel, sous la forme de fichiers de données comprenant un code de programme et,
- un ou plusieurs contenus multimédias à restituer lors de l'exécution de l'application logicielle au moyen du module logiciel.

Par la suite, on considère qu'une application logicielle est gérée comme un contenu multimédia, et présente la particularité d'être constituée de contenus multimédias classiques (tel que des images, des textures, des modèles 3D, des textes, musiques, extraits sonores, etc...) et d'un module logiciel.

Le module logiciel peut se présenter sous la forme d'un programme autonome (par exemple, un programme sous forme de code exécutable, codé dans un fichier d'extension « .exe » dans le cas du système d'exploitation Windows) ou d'un programme nécessitant un moteur d'exécution (par exemple, un exécutable « .jar », un script « .js »).

Un module logiciel nécessitant un moteur d'exécution est par exemple :
- un script ou ensemble de plusieurs scripts nécessitant un moteur d'exécution jouant le rôle d'interpréteur de script apte à interpréter ce script ou,
- un composant logiciel codé dans un langage exploitable par un moteur d'exécution sous la forme d'une machine virtuelle, par exemple en langage Java, Flash, ....

Dans le cas d'une application logicielle qui est un jeu vidéo, le script est utilisé pour alimenter un moteur de jeu et décrire les déplacements et les interactions entre joueurs, caméras, ennemies, éléments du décor, etc.

Des métadonnées sont utilisées pour indexer l'application logicielle dans une base de données d'indexation du serveur de contenus multimédia, appelée CDS, "Content Directory Service" dans le standard UPnP. Ces métadonnées comprennent des données descriptives des différents éléments constitutifs de l'application logicielle, notamment :
- l'environnement d'exécution du module logiciel, indiquant notamment au moins un système d'exploitation compatible avec l'exécution de ce module logiciel, et le cas échéant compatible avec le moteur d'exécution;
- des périphériques requis / optionnels pour l'exécution de l'application logicielle;
- optionnellement une adresse de téléchargement et/ou un identifiant d'un moteur d'exécution, lorsque celui-ci est nécessaire;
- une adresse de téléchargement et/ou un identifiant d'au moins un contenu multimédia à restituer pendant l'exécution de l'application logicielle;

De manière à pouvoir traiter de manière différenciée les contenus de type application logicielle, une nouvelle classe d'objet adaptée et propre aux applications logicielles est définie.

Cette classe est nommée la classe "Applications logicielles". Cette classe "Applications logicielles" est dérivée de la classe *"object.container"* (dans ce cas une application est vue comme un ensemble de contenus multimédia) ou dérivée de la classe *"object.item"* (dans ce cas une application logicielle est vue comme un ensemble de contenus multimédia), par exemple :
- *object.container.applicationContainer ou*
- *object.item.applicationItem.*

Plus précisément, l'indexation d'une application logicielle en tant que contenu multimédia dans un serveur de contenus multimédias UPnP consiste à identifier cette application logicielle comme un objet unique, appartenant à cette nouvelle classe et susceptible d'être restitué par un dispositif de restitution 422 UPnP. En particulier, les métadonnées enregistrées pour un contenu multimédia appartenant à cette nouvelle classe indiquent que le contenu multimédia indexé est une application logicielle. Cette classe de contenu est donc propre aux applications logicielles et est définie pour pouvoir gérer de manière adaptée ces contenus particuliers que sont les applications logicielles.

Ainsi, selon l'invention, les métadonnées d'une application logicielle sont enregistrées dans la base de données d'indexation. Le module logiciel est stocké dans le serveur de contenus multimédias ou sur un serveur distant, par exemple un serveur accessible via le réseau Internet. Dans les deux cas, le serveur de contenus multimédia enregistre une adresse de localisation d'un fichier de données comprenant un module logiciel, adresse à laquelle un dispositif de restitution est susceptible de télécharger ce fichier de données par émission d'une requête HTTP.

La méthode d'indexation permet de gérer au sein d'un serveur de contenus multimédia une application logicielle comme un contenu multimédia classique. Il en est de même pour les différents dispositifs UPnP du réseau.

Les contenus multimédias (images, contenus audio, contenus vidéo...), éventuellement décrits par les métadonnées, et susceptibles d'être restitués pendant l'exécution de l'application logicielle, sont stockés soit sur le serveur de contenus multimédias, soit sur un autre serveur auprès duquel ces contenus multimédias peuvent être obtenus.

Le moteur d'exécution, éventuellement nécessaire selon la nature du module logiciel, et prenant par exemple la forme d'une machine virtuelle ou d'un interpréteur de codes de programme, n'est pas nécessairement stocké dans le serveur de contenus multimédias 41: il peut être téléchargé en ligne ou sur un autre serveur si le dispositif sur lequel le module logiciel doit s'exécuter n'est pas déjà doté d'un tel moteur d'exécution.

Par la suite, on présente un mode de réalisation de l'invention dans lequel les applications logicielles sont des jeux vidéo. Il est clair que ce mode de réalisation ne limite en rien la portée des revendications et que l'invention peut également être mise en oeuvre pour tout type d'application logicielle impliquant la restitution de contenus multimédias (images, contenus audio, contenus vidéo...), comme par exemple des livres interactifs (dans lesquels le moteur permet de lancer la restitution d'un contenu indépendant du moteur), des traitements de textes, des DVD interactifs, etc.

L'invention s'applique tout particulièrement bien au cas d'une application logicielle distribuée sous la forme d'au moins un module logiciel (représentant la logique d'exécution des contenus multimédias de l'application logicielle) mis en oeuvre par l'intermédiaire d'une machine virtuelle (représentant le module d'exécution), et d'un ou plusieurs contenus multimédias à restituer lors de l'exécution de l'application logicielle par l'intermédiaire du module logiciel.

### Dispositif de restitution 422

La figure 3 illustre un exemple de structure simplifiée d'un dispositif de restitution 422 selon un mode de réalisation de l'invention.

Par exemple, le dispositif de restitution 422 comprend une mémoire 31 constituée d'une mémoire tampon, une unité de traitement 32, équipée par exemple d'un microprocesseur, et pilotée par le programme d'ordinateur 33, mettant en oeuvre un procédé de restitution d'une application logicielle selon l'invention.

A l'initialisation, les instructions de code du programme d'ordinateur 33 sont par exemple chargées dans une mémoire avant d'être exécutées par le processeur de l'unité de traitement 32. L'unité de traitement 32 reçoit en entrée au moins une liste de données d'indexation. Le microprocesseur de l'unité de traitement 32 met en oeuvre les étapes du procédé d'exécution d'une application logicielle décrit précédemment, selon les instructions du programme d'ordinateur 33, pour exécuter au moins une application logicielle distribuée préalablement par le dispositif de distribution selon l'invention.

Ainsi le dispositif de restitution 422 forme un dispositif d'exécution d'une application logicielle et comprend, outre la mémoire tampon 31, des premiers moyens de réception de métadonnées (M_{AS}) et d'une commande de restitution (O) d'un contenu multimédia sélectionné par un dispositif de pilotage (DMC), ledit contenu multimédia correspondant à une application logicielle, des seconds moyens de réception d'un module logiciel (M_{L}) dudit contenu multimédia sélectionné, transmis par un serveur de contenus multimédias (DMS), des moyens de vérification d'une présence d'un moteur d'exécution associé audit contenu multimédia, lorsque ledit module logiciel requiert un moteur d'exécution, des moyens d'obtention dudit moteur d'exécution (ME) associé audit contenu multimédia lorsque ledit module logiciel requiert un moteur d'exécution et que ledit moteur d'exécution est absent dudit dispositif de restitution 422 (DMR), des moyens de restitution dudit contenu multimédia sélectionné. Ces moyens sont pilotés par le microprocesseur de l'unité de traitement 32.

Conformément au standard UPnP, le dispositif de restitution 422 met en oeuvre un service de gestion de connexion, nommé "*ConnectionManager*", au moyen duquel un point de contrôle UPnP est susceptible, par envoi d'une commande nommée *"GetProtocolInfo",* d'obtenir en retour une liste des protocoles et des types MIME que le dispositif de restitution 422 DMR est capable d'interpréter et de décoder pour restituer une ressource d'un contenu multimédia codé. En réponse à cette commande, le dispositif de restitution 422 DMR envoie une structure de données, nommée *"Sink",* comprenant les informations demandées.

A réception d'une telle structure de données, le point de contrôle vérifie que le dispositif de restitution 422 concerné est en mesure de restituer un contenu multimédia sélectionné en comparant les métadonnées de ce contenu multimédia aux capacités de restitution du dispositif de restitution 422 UPnP.

Outre les fonctions prévues dans le standard UPnP, le dispositif de restitution 422 est susceptible d'être interrogé au moyen d'une requête (action UPnP), nommée par exemple "GetEnvironmentDescription", le dispositif de restitution 422 fournissant en réponse à une telle requête les informations suivantes:
- une information sur l'environnement d'exécution du dispositif de restitution 422, notamment sur le système d'exploitation sous lequel s'exécute le dispositif de restitution 422;
- une information représentative des périphériques de l'équipement mettant en oeuvre le dispositif de restitution 422.

Le service "ConnectionManager" ou 'RenderingControl" mis en oeuvre par le dispositif de restitution 422 conformément au standard UPnP est par exemple étendu afin de prévoir l'action UPnP supplémentaire "GetEnvironmentDescription".

En outre, le dispositif de restitution 422 est conçu pour, lorsqu'un contenu multimédia sélectionné pour une restitution par ce dispositif de restitution 422 est une application logicielle, déclencher une exécution de l'application logicielle. Cette exécution est déclenchée, suite à la réception d'une commande de restitution en provenance du dispositif de pilotage 421, au moyen dudit module logiciel reçu du serveur de contenus indexant cette application logicielle dans sa base de données d'indexation de contenus.

### Dispositif de pilotage 421

La figure 2 illustre un exemple de structure simplifiée d'un dispositif de pilotage 421 d'entités UPnP: un tel dispositif est notamment apte à piloter des serveurs de contenus UPnP et des dispositifs de restitution UPnP.

Dans le mode de réalisation décrit ici, le dispositif d'exécution comprend une mémoire 21 constituée d'une mémoire tampon, une unité de traitement 22, équipée par exemple d'un microprocesseur, et pilotée par le programme d'ordinateur 23, mettant en oeuvre le procédé d'exécution d'une application logicielle selon l'invention.

A l'initialisation, les instructions de code du programme d'ordinateur 23 sont par exemple chargées dans une mémoire avant d'être exécutées par le processeur de l'unité de traitement 22. L'unité de traitement 22 reçoit en entrée des données d'indexation d'applications logicielles. Le microprocesseur de l'unité de traitement 22 met en oeuvre les étapes d'un procédé de sélection d'une application logicielle, selon les instructions du programme d'ordinateur 23, pour sélectionner au moins une application logicielle préalablement indexée.

Pour cela, le dispositif de pilotage d'une application logicielle comprend, outre la mémoire tampon 21, des moyens de transmission d'une requête (R) d'obtention d'une pluralité de métadonnées d'une base de données d'indexation, relatives à des contenus multimédias indexés par un serveur de contenus multimédias (DMS), des moyens d'obtention desdites métadonnées (M) de ladite base de données d'indexation, des moyens de sélection, à partir desdites métadonnées obtenues, d'un contenu multimédia à restituer, ledit contenu multimédia sélectionné étant une application logicielle indexée en tant que contenu multimédia par ledit serveur de contenus multimédias, des moyens de sélection d'un dispositif de restitution 422 de contenus multimédias (DMR) apte à restituer ledit contenu multimédia sélectionné correspondant à ladite application logicielle, des moyens de transmission, audit dispositif de restitution 422 sélectionné, des métadonnées (M_{AS}) dudit contenu multimédia sélectionné correspondant à ladite application logicielle, des moyens de transmission d'une commande de restitution (O) dudit contenu multimédia sélectionné, audit dispositif de restitution 422 (DMR) sélectionné. Ces moyens sont pilotés par le microprocesseur de l'unité de traitement 22.

Le dispositif de pilotage 421 comprend les fonctions définies dans le standard UPnP pour un point de contrôle UPnP. Il est en outre modifié de manière à pouvoir gérer des contenus d'un nouveau type, appartenant à la classe "Applications logicielles" décrite ci-dessus. Le dispositif de pilotage 421 doit notamment être capable d'interpréter et de traiter les métadonnées d'une application logicielle telles qu'enregistrées par le serveur de contenus 41 lors de l'indexation d'une application logicielle. Lors de l'affichage des contenus indexés par un serveur de contenus, il est prévu dans l'interface utilisateur du dispositif de pilotage 421 de représenter les contenus appartenant à la classe "Applications logicielles" d'une manière différente de celle utilisée pour les autres contenus, par exemple au moyen d'un logo différent, représentatif de ce type de contenu.

En outre, comme dans le standard UPnP, le dispositif de pilotage 421 est en charge de vérifier la compatibilité entre un contenu sélectionné par un utilisateur et un dispositif de restitution 422 sélectionné par cet utilisateur pour la restitution du contenu sélectionné. En l'occurrence, lorsque le contenu sélectionné appartient à la classe "Applications logicielles" des vérifications supplémentaires sont à effectuer par le dispositif de pilotage 421 à partir des métadonnées de l'application logicielle sélectionnée:
- une première étape de vérification d'une compatibilité environnementale entre :
   - une métadonnée représentative d'un environnement d'exécution dudit contenu multimédia sélectionné, et
   - une information sur un environnement d'exécution du dispositif de restitution 422 sélectionné,
- une deuxième étape de vérification d'une compatibilité matérielle entre :
   - une métadonnée représentative de périphériques utilisés par ladite application logicielle ;
   - une information représentative des périphériques d'un équipement mettant en oeuvre le dispositif de restitution 422 sélectionné.

Conformément à l'invention, le dispositif de pilotage 421 interroge le dispositif de restitution 422 sélectionné par invocation de l'action UPnP "GetEnvironmentDescription" décrite ci-dessus, afin d'obtenir les informations nécessaires:
- information sur l'environnement d'exécution du dispositif de restitution 422;
- information représentative des périphériques d'un équipement mettant en oeuvre le dispositif de restitution 422 sélectionné.

### Description d'un mode de réalisation du procédé de gestion et d'indexation d'une application logicielle de type jeu vidéo.

On décrit ci-après un mode de réalisation de la gestion d'une application logicielle du type jeu vidéo au sein d'un réseau UPnP. La définition d'un jeu vidéo, le fonctionnement du standard UPnP et le traitement classique de contenus multimédias sont également détaillés, afin de décrire les modifications techniques apportées à chaque entités UPnP selon l'invention.

### Définition d'un jeu vidéo

Traditionnellement, on décompose un jeu vidéo, en deux éléments. D'une part, un ensemble de contenus multimédias (images, textures, modèles 3D, textes, musiques, etc), et d'autre part, au moins un module logiciel, en mesure d'orchestrer l'affichage de ces contenus multimédias à l'écran afin que le joueur vive son expérience de jeu.

Plus précisément, le module logiciel peut se présenter sous la forme d'un programme autonome (par exemple, un exécutable « .exe ») ou d'un programme nécessitant un moteur d'exécution (par exemple, un exécutable « .jar »).

Un module logiciel nécessitant un moteur d'exécution est par exemple un script nécessitant un interpréteur de script (jouant le rôle d'un moteur d'exécution) apte à interpréter ce script ou, un composant logiciel codé dans un langage exploitable par un moteur d'exécution se présentant sous la forme d'une machine virtuelle.

Certains développeurs de jeu vidéo choisissent de développer un module logiciel de jeu vidéo suffisamment générique, non spécifique à un jeu vidéo précis, en mesure d'orchestrer des logiciels différents si la partie « contenu multimédia» est modifiée.

Parfois encore, le module logiciel de jeu vidéo est un programme autonome (un « *player de jeu* », c'est-à-dire un programme sous forme de code exécutable (par exemple « .exe » sou Windows™) et les contenus multimédias jeux vidéo sont stockés dans un format propre au module logiciel de jeu vidéo.

Certains jeux s'exécutent par l'intermédiaire d'un moteur d'exécution prenant la forme de machine virtuelle. Une machine virtuelle met en oeuvre du code intermédiaire d'un module logiciel, qui a été compilé de manière normalisée pour être exécuté sur n'importe quelle plateforme disposant d'une machine virtuelle adéquate. Ainsi, une application logicielle s'exécutant sur une machine virtuelle est composée d'un ou plusieurs modules logiciels pouvant être téléchargés indépendamment de la machine virtuelle en question. Parmi les jeux mis en oeuvre sur une machine virtuelle on peut citer les jeux ou applications logicielles en langage Flash (fichiers .SWF), les jeux ou applications logicielles en Java (fichiers .JAR), Silverlight, le jeu d'aventure Lucas Art (« *ScummVM »*) etc.

### Exécution d'une application logicielle au moyen d'entités UPnP

Le scénario d'exécution d'une application logicielle indexée en tant que contenu par un serveur de contenus UPnP reprend avec quelques adaptations les principes généraux du scénario de restitution d'un contenu multimédia classique (images, textures, modèles 3D, textes, musiques etc) tel que défini dans le standard UPnP et se déroule de la manière suivante:
1. indexation d'applications logicielles par le serveur de contenus 41;
2. obtention par le dispositif de pilotage 421 de métadonnées de contenus indexés ;
3. sélection d'un contenu (en l'occurrence d'une application logicielle), au moyen d'une interface utilisateur du dispositif de pilotage 421;
4. sélection d'un dispositif de restitution 422, au moyen d'une interface utilisateur du dispositif de pilotage 421;
5. envoi, du dispositif de pilotage 421 au dispositif de restitution 422, de métadonnées du contenu sélectionné, formant les paramètres de restitution et téléchargement éventuel par le dispositif de restitution 422 d'un moteur d'exécution;
6. envoi, par le dispositif de pilotage 421 au dispositif de restitution 422, d'une commande de déclenchement de la restitution du contenu sélectionné,
7. exécution de l'application logicielle.

Ces différentes phases sont décrites ci-dessous par référence aux figures 5 à 8, sur lesquelles sont représentées respectivement,
- figure 5: les étapes 51 à 53 d'un procédé 50 de gestion d'applications logicielles mis en oeuvre par le serveur de contenus 41, l'étape d'indexation 51 incluant les étapes 511 à 514;

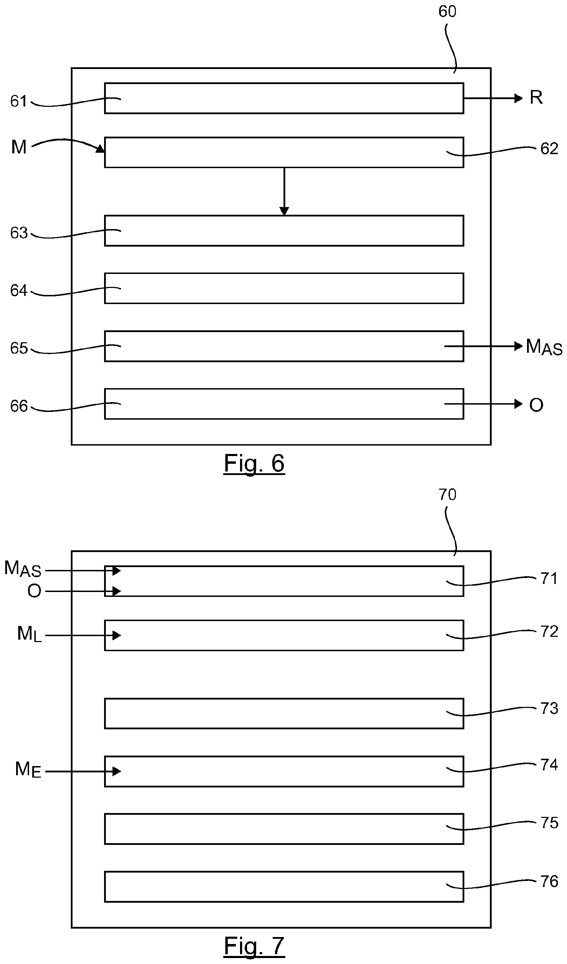

- figure 6: les étapes 61 à 66 d'un procédé 60 de pilotage mis en oeuvre par le dispositif de pilotage 421;
- figure 7: les étapes 71 à 76 d'un procédé 70 d'exécution d'une application logicielle mis en oeuvre par le dispositif de restitution 422;

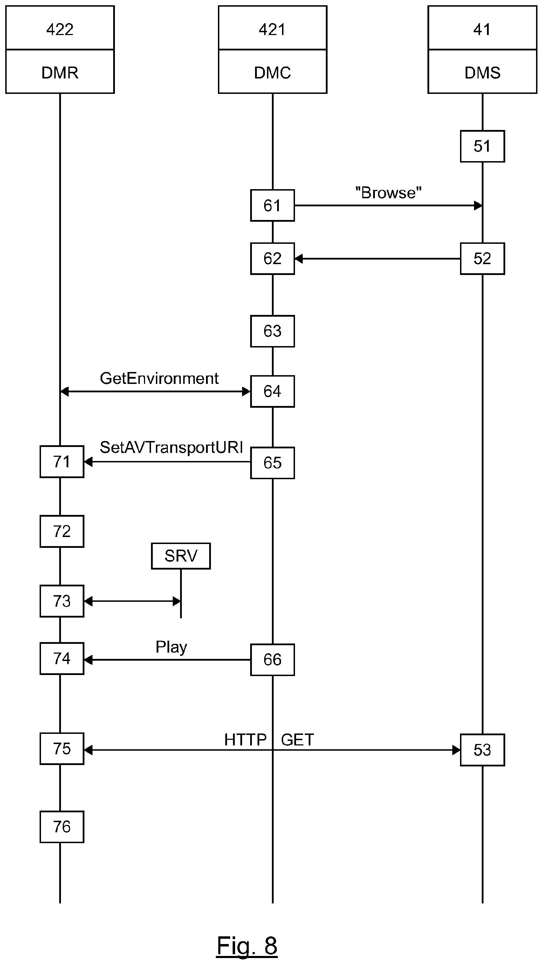

Ces différentes étapes sont représentées de manière chronologique à la figure 8. La description qui suit respecte la chronologie de ces étapes.

### 1. Indexation d'applications logicielles selon l'invention

L'indexation spécifique de l'invention correspond à une évolution de l'indexation usuelle des contenus multimédias définie précédemment dans le standard UPnP, en définissant une nouvelle classe d'objets adaptée aux applications logicielles.

La phase d'indexation, mise en oeuvre au sein du serveur de contenus multimédias 41, comprend quatre étapes de détermination et d'indexation de métadonnées de l'application logicielle : une étape de détermination d'au moins une métadonnée représentative d'un environnement d'exécution 511, indiquant notamment au moins un système d'exploitation compatible avec l'exécution du module logiciel, et le cas échéant compatible avec le moteur d'exécution requis par le module logiciel, une étape de détermination d'au moins une métadonnée représentative des périphériques utilisés par l'application logicielle 512, une étape de détermination d'au moins une métadonnée représentative d'une localisation (correspondant par exemple à une adresse de téléchargement) et/ou d'un identifiant d'au moins un contenu multimédia à restituer par l'application logicielle 513 et une étape d'indexation 514, au sein d'une base de donnée des métadonnées, précédemment déterminées, de l'application logicielle.

Optionnellement, la phase d'indexation peut également comprendre une étape de détermination d'au moins une métadonnée représentative d'une localisation (correspondant par exemple à une adresse de téléchargement) et/ou d'un identifiant d'un moteur d'exécution associé à l'application logicielle, si le module logiciel nécessite d'être exécuté par un moteur d'exécution.

Ainsi, chaque élément constitutif des métadonnées d'une application logicielle, par exemple un jeu vidéo, est indexé au sein de la liste de données d'indexation, afin que l'ensemble de ces éléments soit décrit et disponible pour les dispositifs connectés au réseau.

En ce qui concerne le contenu multimédia d'une application logicielle de type jeu vidéo, celui-ci correspond par nature à un ensemble de données tel que des images, des textures, des modèles 3D, des textes, musiques, extraits sonores, etc.

En fonction du moteur de jeu, ces données peuvent être :
∘ regroupées au sein d'un seul et même fichier (ex : fichier .WAD du moteur de jeu Doom) ;
∘ référencées dans un fichier type XML qui indique l'emplacement de tous les fichiers de données ;
∘ ou bien encore stockées dans une arborescence spécifique attendue par le moteur d'exécution.

Dans les deux premiers cas, l'adresse de localisation de la ressource de l'élément UPnP (image, texture, des modèle 3D, texte, musique, extrait sonore, etc.) référence un nom de fichier. Dans le dernier cas, l'adresse de localisation de la ressource de l'élément UPnP référence le répertoire qui contient des données nécessaires à l'exécution.

Un exemple de métadonnée caractéristique d'un contenu multimédia d'une application logicielle correspondant à un jeu est notamment reproduit en Annexe 1.

Par ailleurs, en utilisant cette indexation spécifique des éléments constitutifs des applications logicielles, le serveur de contenus multimédias d'un réseau créé, au sein de sa base de données, une nouvelle classe de contenus multimédias relatifs aux applications logicielles, en sus des classes classiques telles que celles dédiées spécifiquement à la musique, les photos ou la vidéo.

Pour chaque répertoire servant à indexer un jeu vidéo et chaque caractéristique relative à ce jeu vidéo, est utilisée une identification de la classe "Applications logicielles" d'appartenance de l'application logicielle. Cette classe peut être dérivée de la classe *"object.container" ou de la classe "object.item",* par exemple :
- *object.container.applicationContainer ou*
- *object.item.applicationItem*

Un exemple de représentation objet d'une application logicielle est notamment reproduit en Annexe 1. Dans cette annexe, qui fait partie intégrante de la description, les propriétés mises en évidence sont les propriétés spécifiques à la phase d'indexation mise en oeuvre dans le procédé gestion de l'indexation d'application logicielle selon l'invention. En particulier, le champ "specific:" correspond à des propriétés "vendor specific" utilisées pour enrichir la description d'un jeu selon l'invention.

Par ailleurs, les données indexées sont mises à jour (515) dès lors qu'une nouvelle application logicielle ou une nouvelle version d'application logicielle est détectée au sein du réseau. En effet, il se peut que l'un des dispositifs connecté au réseau, télécharge via le réseau Internet (I), une nouvelle application logicielle. Le procédé selon l'invention permet alors d'indexer cette nouvelle application logicielle afin de la partager par la suite avec les autres dispositifs connectés au réseau.

Par exemple, un utilisateur achète un nouveau jeu pour un premier dispositif UPnP (son ordinateur personnel). A la suite de l'installation, l'ensemble des éléments caractéristiques de ce nouveau jeu vidéo est indexé selon le procédé préalablement décrit. Et dans le cas particulier où certains développeurs d'applications logicielles choisissent de développer un moteur d'exécution suffisamment générique, il est possible de ne télécharger du réseau que le contenu multimédia de ce jeu, si le moteur d'exécution de ce jeu est déjà présent sur un autre dispositif UPnP que l'utilisateur souhaite utiliser pour jouer à ce jeu (par exemple une console de jeu).

Selon un mode de réalisation particulier, la mise à jour, peut être automatique à chaque fois qu'une nouvelle application logicielle ou une nouvelle version d'application logicielle est détectée. Ainsi, la mise à jour permet d'enrichir et d'optimiser automatiquement la gestion du réseau.

Selon un autre mode de réalisation, il est possible de différer la mise à jour à une heure précise de la journée, afin notamment que cette mise à jour soit effectuée lorsque le réseau et plus particulièrement le serveur de contenus multimédias est moins sollicité.

### 2. Obtention de métadonnées de contenus indexés

Le dispositif de pilotage 421 transmet une requête (61) "browse" pour obtenir du serveur de contenus multimédias 41, la base de données d'indexation contenant les métadonnées des contenus multimédias indexés par le serveur de contenus multimédias 41.

En réponse à une requête "browse" émise par un dispositif de pilotage 421, le serveur de contenus multimédias 41 transmet (52) l'ensemble (ou une partie) des métadonnées de la base d'indexation, le dispositif de pilotage 421 recevant (62) les métadonnées du serveur de contenus multimédias.

Comme détaillé par la suite, les métadonnées transmises par le serveur de contenus multimédias 41, permettent ensuite à un utilisateur, via le dispositif de pilotage 421, de sélectionner un contenu multimédia et en particulier une application logicielle.

### 3. Sélection d'un contenu

Le dispositif de pilotage 421 est associé à une interface utilisateur présentant à un utilisateur les métadonnées précédemment obtenues de la base de données d'indexation contenant une liste de contenus multimédias à restituer. L'utilisateur sélectionne (63), via cette interface associée au dispositif de pilotage 421, une application logicielle qu'il souhaite utiliser.

En l'occurrence, selon ce mode de réalisation, l'utilisateur sélectionne une application logicielle qui est un jeu vidéo.

### 4. Sélection d'un dispositif de restitution 422

En plus de la vérification classique des formats/protocoles, le dispositif de pilotage 421, interroge (64) tous les dispositifs de restitution UPnP du réseau, afin d'obtenir pour chacun d'eux des informations représentatives de l'environnement d'exécution du dispositif de restitution 422 concerné et des périphériques de l'équipement mettant en oeuvre ce dispositif de restitution 422, par invocation de l'action « *GetEnvironnmentDescription()* » du service de gestion de connexion réseau (« *ConnectionManager* ») du dispositif de restitution 422 qui a été décrite ci-dessus.

L'environnement d'exécution correspond plus précisément au système d'exploitation, aux couches de logiciels, aux pilotes (de l'anglais « *drivers* ») de matériels périphériques, etc.

Les matériels périphériques qui sont requis pour l'exécution du jeu vidéo sont par exemple le clavier, la souris, une manette couramment appelée joypad ou gamepad (manette de jeu avec boutons et croix directionnelle). ou un joystick (manche à ballet).

### Première variante de réalisation.

Dans cette première variante, la sélection de l'application logicielle est effectuée avant la sélection du dispositif de restitution cible: cette dernière s'effectue au moyen d'une liste de dispositifs de restitution filtrée, ne comportant que les dispositifs de restitution compatibles avec l'application sélectionnée.

En premier lieu, l'utilisateur obtient la liste des contenus multimédias et jeux d'un serveur de contenus multimédias, à partir d'un dispositif de pilotage 421 installé sur un téléphone mobile, et sélectionne une application logicielle, par exemple sous forme de jeu vidéo.

Le dispositif de pilotage 421 vérifie la compatibilité de chaque dispositif de restitution 422 du réseau avec l'application logicielle sélectionnée selon deux « tests » de compatibilités déjà décrits ci-dessus, portant premièrement sur une comparaison de l'environnement d'exécution et deuxièmement sur une comparaison des matériels périphériques du dispositif d'exécution et de l'application logicielle.

Ces deux tests délivrent un résultat positif ou négatif indiquant si le dispositif de restitution 422 testé est compatible avec l'application logicielle sélectionnée. A l'issue de ces deux tests, seule l'obtention de deux résultats positifs valide la compatibilité de chaque dispositif de restitution 422 avec l'application logicielle sélectionnée.

Le dispositif de pilotage 421 analyse l'ensemble des métadonnées indexées du jeu vidéo sélectionné et propose à l'utilisateur une liste de dispositifs de restitution compatibles avec l'application logicielle sélectionnée, c'est-à-dire ceux mis en oeuvre dans un équipement convenant pour l'exécution de l'application logicielle sélectionnée. En d'autres termes, le dispositif de pilotage 421 réalise un filtrage des dispositifs de restitution en fonction de leur compatibilité avec l'application logicielle préalablement sélectionnée. L'utilisateur peut alors sélectionner le dispositif de restitution 422 qu'il souhaite utiliser parmi cette liste de dispositifs de restitution compatibles.

Dans le cas où plusieurs dispositifs de restitution sont disponibles sur le réseau, la liste des dispositifs peut être présentée selon un ordre arbitraire ou selon un ordre préférentiel en fonction d'un paramètre prédéterminé (mémoire, capacité du processeur, taille de l'écran...)

L'utilisateur sélectionne ensuite parmi cette liste de dispositifs de restitution compatibles un dispositif de restitution 422 qu'il souhaite utiliser.

### Deuxième variante de réalisation.

Dans cette deuxième variante, la sélection de l'application logicielle est effectuée avant la sélection du dispositif de restitution cible: cette dernière s'effectue au moyen d'une liste de dispositifs de restitution non filtrée, comprenant tous les dispositifs de restitution du réseau. Une vérification de compatibilité est effectuée suite à ces deux sélections.

Selon cette deuxième variante, l'utilisateur obtient la liste des contenus multimédias et jeux d'un serveur de contenus multimédias, à partir d'un dispositif de pilotage 421 installé sur un téléphone mobile, et sélectionne une application logicielle, par exemple sous forme de jeu vidéo.

Puis l'utilisateur sélectionne via une interface utilisateur associée au dispositif de pilotage 421, un dispositif de restitution 422 qu'il souhaite utiliser pour l'exécution d'une application logicielle préalablement sélectionnée, ou encore indique un ordre de préférence d'analyse afin que le dispositif de pilotage 421 vérifie la compatibilité des dispositifs de restitutions disponibles selon cet ordre de préférence.

Ensuite, le dispositif de pilotage 421, vérifie si le dispositif de restitution 422 sélectionné est compatible avec l'application logicielle sélectionnée ou bien, si l'utilisateur a indiqué un ordre de préférence, le dispositif de pilotage 421 sélectionne le premier dispositif de restitution 422, selon l'ordre de préférence indiqué, dont la compatibilité est validée à l'issue de ces deux tests.

Le test de compatibilité utilisé dans cette deuxième variante est identique à celui décrit ci-dessus pour la première variante de réalisation.

### Troisième variante de réalisation

Dans cette troisième variante, la sélection du dispositif de restitution 422 est effectuée avant la sélection de l'application logicielle. La vérification de compatibilité est effectuée suite à ces deux sélections, de la même manière que dans la deuxième variante de réalisation.

Quelle que soit la variante choisie, on suppose qu'une application logicielle a été sélectionnée et que le dispositif de restitution 422 sélectionné est le dispositif de restitution 422, compatible avec l'application logicielle sélectionnée.

### 5. Envoi de métadonnées de l'application logicielle sélectionnée

Une fois le dispositif de restitution 422 sélectionné, le dispositif de pilotage 421 transmet (65) au dispositif de restitution 422 sélectionné des paramètres de restitution, comprenant l'adresse de localisation du contenu sélectionné à restituer et les métadonnées (M_{AS}) de ce contenu, qui en l'occurrence est une application logicielle: dans ce but, le dispositif de pilotage 421 invoque l'action *"SetAVTransportURI"* du service "AVTransport" du dispositif de restitution 422 UPnP.

Cette adresse de localisation est par exemple :
- une adresse URI qui désigne le serveur de contenus 41 comme entité auprès de laquelle un fichier de données comprenant ce module logiciel peut être obtenu, ou bien
- une adresse URL (Uniform Resource Locator) qui désigne un serveur distant comme entité auprès de laquelle un fichier de données comprenant ce module logiciel peut être obtenu.

Les métadonnées transmises comprennent une donnée représentative d'une localisation d'un moteur d'exécution, si le module logiciel de l'application logicielle sélectionné en requiert un. Cette donnée peut par exemple prendre la forme d'une adresse de téléchargement (par exemple de type URL) auprès d'un dispositif connecté au réseau.

Le dispositif de restitution 422 reçoit (71) du dispositif de pilotage 421 les métadonnées transmises par le dispositif de pilotage 421.

Le dispositif de restitution 422 analyse alors les métadonnées (M_{AS}) transmises en paramètre de l'action *"SetAVTransportURI"* :
a. il extrait notamment les propriétés relatives au module logiciel (M_{L}) du contenu multimédia sélectionné correspondant à une application logicielle. Plus précisément, le dispositif de restitution 422, une fois qu'il a détecté l'élément représentatif du module logiciel correspondant à son environnement, utilise les informations spécifiques au module logiciel (nom, version) pour vérifier s'il possède les éléments adéquats pour exécuter le jeu. En particulier, si le module logiciel requiert un moteur d'exécution (M_{E}), le dispositif de restitution 422 vérifie (72) qu'il dispose bien du moteur d'exécution requis.
b. si ce n'est pas le cas, le dispositif de restitution 422 utilise une adresse de localisation fournie par le dispositif de pilotage (421) dans la métadonnée du contenu multimédia sélectionné pour obtenir (73), par exemple par téléchargement, le moteur d'exécution approprié à l'environnement du contenu multimédia sélectionné correspondant à une application logicielle. Le téléchargement du moteur d'exécution se fait, selon cet exemple, de manière asynchrone pour ne pas bloquer l'action *"SetAVTransportURI".* Le moteur d'exécution est par exemple obtenu à partir d'un serveur Internet d'un fournisseur de jeu (de l'anglais « *Game Engine Provider »).*
c. le dispositif de restitution 422 peut également initier le téléchargement du contenu multimédia (image, texture, des modèle 3D, texte, musique, extrait sonore, etc.) associé à l'application logicielle (sélectionnée en tant que contenu multimédia), ce téléchargement peut notamment être effectué de manière asynchrone.

Par exemple, si l'utilisateur souhaite ponctuellement utiliser une application logicielle sur un téléphone mobile, sans s'encombrer en permanence du moteur d'exécution de taille importante et/ou du contenu multimédia, le téléphone mobile, une fois connecté au réseau, sait grâce à l'adresse de localisation distribuée par le procédé selon l'invention où aller chercher l'élément caractéristique manquant, par exemple le moteur d'exécution de l'application logicielle lorsqu'il souhaite l'utiliser.

Ainsi, le procédé selon l'invention offre une grande flexibilité de gestion des ressources. En effet, la localisation du moteur d'exécution est indiquée lors de la phase de distribution, si bien que le stockage du moteur d'exécution (M_{E}) peut être adapté en fonction des contraintes du réseau et pas nécessairement sur le serveur de contenus multimédias.

### 6. Déclenchement de l'exécution de l'application logicielle sélectionnée

Enfin, le dispositif de pilotage 421 transmet (66) au dispositif de restitution 422 sélectionné une commande de restitution correspondant à l'action « *Play()* » du service "*AVTransport*" du dispositif de restitution 422.

Le dispositif de restitution 422 reçoit (74) du dispositif de pilotage 421 la commande de restitution et utilise l'adresse de localisation du module logiciel de l'application logicielle sélectionnée pour obtenir un fichier de données comprenant ce module logiciel: le dispositif de restitution 422 émet (75) une requête HTTP de type "GET" à destination du serveur de contenus 41 qui transmet (53) en retour le fichier de données demandé.

### 7. Exécution de l'application logicielle

Etant donné que la commande de restitution est émise pour un contenu appartenant à la classe "Applications logicielles", le dispositif de restitution 422 déclenche, au cours de l'étape 76, l'exécution de l'application logicielle sélectionnée (au lieu de déclencher la restitution d'un contenu comme il le ferait pour un contenu audio et/ou vidéo) sur l'équipement hébergeant le dispositif de restitution 422, c'est-à-dire déclenche l'exécution, par le système d'exploitation de cet équipement, de l'application logicielle sélectionnée. L'application logicielle s'exécute alors en utilisant les périphériques de cet équipement, périphériques que l'utilisateur doit manipuler pour interagir avec cette application logicielle.

Le scénario d'exécution d'une application logicielle indexée en tant que contenu a été décrit ci-dessus dans le cas d'utilisation d'un modèle UPnP à trois boîtes (DMC 421, DMR 422, DMS 41). Il est transposable sans difficulté au modèle UPnP à deux boîtes (DMP, DMS), dans lequel les fonctions du DMC et celles du DMR sont intégrées dans un seul et même dispositif UPnP. Dans ce modèle à deux boîtes, les échanges par invocation d'action entre le DMC 421 et le DMR 422 décrits pour le modèle à trois boîtes sont remplacés par de simples appels de fonction.

### ANNEXE 1

### 1. Exemple de métadonnées d'une photo selon le protocole UPnP :

```
 <item id="2$73688166$805306398" parentID="2$73688166" restricted="1">
 <dc:title>Plage</dc:title>
 <upnp:album>Vacances</upnp:album>
 <dc:date>2009-07-16</dc:date>
 <upnp:class>object.item.imageItem.photo</upnp:class>
 <res size="19623" resolution="720x479" protocolInfo="http-
 get:*:image/jpeg:DLNA.ORG_PN=JPEG_MED;DLNA.ORG_OP=01;DLNA.ORG_FLAGS=00f0
 0000000000000000000000000000">http://192.168.1.15:8055/DLNA-
 720x479/photo/plage.jpg</res>
 <res resolution="48x32" protocolInfo="http-
 get:*:image/jpeg:DLNA.ORG_PN=JPEG_TN;DLNA.ORG_OP=01;DLNA.ORG_CI=1;DLNA.O
 RG_FLAGS=00f00000000000000000000000000000">
 http://192.168.1.15:8055/dlna-48x32/photo/plage.jpg</res>
 </item>
```

### 2. Exemple de métadonnées utilisées pour le contenu multimédia d'une application logicielle correspondant par exemple à un jeu en langage flash selon le procédé de distribution de l'invention, selon le protocole UPnP :

- Genre : [String] (ex : Actions, Aventure, Shoot'them up) : type de jeu
- List of compatible Game Engines - Five parameters per Game Engine :
   *1)* Environment [String] (ex: Windows, Linux, Playstation 3, Xbox 360 etc) : *Environnement d'exécution de jeu*
   2) Environment version : [String]
   3) Name : [String] (ex : Flash, Java, Doom, ScummVM) : *Nom du game engine*
   4) Version : [String]
   5) Game Engine Provider URL [String] : *Adresse vers le fournisseur de game engine disposant de ce game engine en particulier, dans la bonne version et pour le bon environnement.*
- Rating : [Number] (ex : 18 and more) : *Age legal minimum d'utilisation.*
- Difficulty: [String] (ex : Easy, Medium, Hard) : *Difficulté globale du jeu.*
- Life span: [Number] (ex : 5 hours) : *Durée de vie du jeu, c'est à dire temps de jeu total prévu pour un joueur moyen.*
- Required Peripherals: [String list] (ex: Keyboard, Joystick) : *Périphérique nécessaire pour jouer.*
- Optional Peripherals: [String list] (ex: Wheel) : *Périphérique pouvant être utilisé avec le jeu pour une expérience améliorée.*

### 3. Exemple de représentation objet d'une application logicielle correspondant par exemple à un jeu en langage flash utilisée selon le procédé de distribution de l'invention, utilisant notamment une nouvelle classe d'indexation dédiée aux applications logicielles interactives, selon le protocole UPnP :

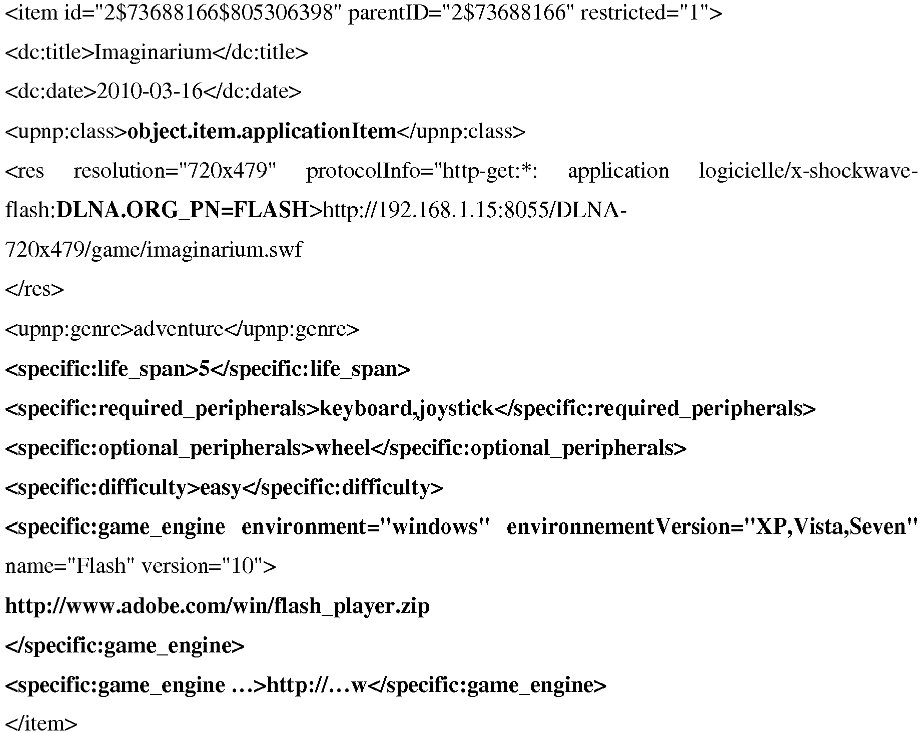

Les propriétés en gras sont les propriétés spécifiques à la phase d'indexation mise en oeuvre dans le procédé de distribution d'une application logicielle selon l'invention. En particulier, le champ "specific:" correspond à des propriétés "vendor specific" utilisées pour enrichir la description d'un jeu.

## Revendications

1. Procédé de gestion d'au moins une application logicielle (50), mis en oeuvre par un serveur de contenus multimédias (DMS), **caractérisé en ce qu'**il comprend :
- une phase d'indexation (51), dans une base de données d'indexation de contenus, d'au moins une application logicielle en tant que contenu, par enregistrement de métadonnées indiquant que ledit contenu ainsi indexé est une application logicielle et enregistrement d'une adresse de localisation d'un fichier de données comprenant un module logiciel conçu pour exécuter ladite au moins une application logicielle ;
- une phase de transmission (52) desdites métadonnées et de ladite adresse de localisation à un dispositif de pilotage (DMC), servant à sélectionner une application logicielle indexée à restituer et à piloter la restitution de l'application logicielle sélectionnée.

2. Procédé selon la revendication 1, **caractérisé en ce qu'**il comprend une phase de transmission (53) dudit module logiciel, à au moins un dispositif de restitution de contenus multimédias (DMR) sur lequel l'application logicielle sélectionnée est à restituer.

3. Procédé de gestion selon la revendication 1, **caractérisé en ce que** lesdites métadonnées comprennent une identification d'une classe de contenus à laquelle appartient ladite application logicielle, ladite classe de contenus étant propre à des contenus qui sont des applications logicielles.

4. Procédé selon la revendication 3, dans lequel le serveur de contenus multimédia est un serveur de contenus multimédias UPnP et ladite classe est une classe dérivée de la classe UPnP nommée *"object.item".*

5. Procédé selon la revendication 3, dans lequel le serveur de contenus multimédia est un serveur de contenus multimédias UPnP et ladite classe est une classe dérivée de la classe UPnP nommée *"object.container".*

6. Procédé de gestion d'une application logicielle selon la revendication 1, **caractérisé en ce que** ladite phase d'indexation comprend une étape de détermination et d'enregistrement d'au moins une métadonnée représentative d'une localisation et/ou d'un identifiant d'au moins un contenu multimédia utilisé par ladite application logicielle (513) lors de son exécution.

7. Procédé de gestion d'une application logicielle selon la revendication 1, **caractérisé en ce que** ladite phase d'indexation comprend en outre une étape de détermination et d'enregistrement d'au moins une métadonnée représentative d'une localisation et/ou d'un identifiant d'un moteur d'exécution associé à ladite application logicielle, lorsque ledit module logiciel nécessite d'être exécuté par un moteur d'exécution.

8. Procédé de gestion d'une application logicielle selon la revendication 1, **caractérisé en ce qu'**il comprend en outre une phase de mise à jour (515) de ladite base de données d'indexation lorsqu'une nouvelle version d'application logicielle, ou une nouvelle application logicielle est détectée.

9. Procédé de pilotage (60) d'une exécution d'une application logicielle, mis en oeuvre par un dispositif de pilotage (DMC), **caractérisé en ce qu'**il comprend :
- une étape d'obtention, auprès d'un serveur de contenus multimédia, de métadonnées (M) d'au moins une application logicielle indexée dans une base de données d'indexation de contenus et d'une adresse de localisation d'au moins un fichier de données associé à ladite application logicielle indexée selon le procédé de la revendication 1;
- une étape de transmission (65), à un dispositif de restitution (422) de contenus multimédia, de métadonnées (M_{AS}), de ladite adresse de localisation et d'une commande de restitution (O) de l'application logicielle indexée,
ladite commande de restitution (O) étant destinée à déclencher l'exécution de ladite application logicielle indexée au moyen d'un module logiciel encodé dans ledit fichier de données.

10. Procédé de pilotage selon la revendication 9, **caractérisé en ce qu'**il comprend une étape de vérification de la compatibilité du dispositif de restitution avec ladite application logicielle indexée, à partir d'une information sur un environnement d'exécution dudit dispositif de restitution (DMR) et d'une information représentative d'au moins un périphérique dudit dispositif de restitution (DMR).

11. Procédé de pilotage selon la revendication 10, **caractérisé en ce qu'**il comprend :
- une première étape de vérification d'une compatibilité environnementale entre :
- une métadonnée représentative d'un environnement d'exécution de ladite application logicielle indexée, et
- ladite au moins une information sur un environnement d'exécution dudit au moins un dispositif de restitution (DMR),
- une deuxième étape de vérification d'une compatibilité matérielle entre :
- une métadonnée représentative de périphériques utilisés par ladite application logicielle indexée;
- ladite au moins une information représentative des périphériques préalablement obtenue.

12. Procédé de restitution (70) d'une application logicielle, mis en oeuvre par un dispositif de restitution (DMR) de contenus multimédia, **caractérisé en ce qu'**il comprend :
- une étape de réception d'une adresse de localisation, de métadonnées (M_{AS}) et d'une commande de restitution (O) d'un contenu indexé dans une base de données d'indexation de contenus multimédia, selon le procédé de la revendication 1, et, en réponse à ladite commande de restitution, lorsque lesdites métadonnées indiquent que le contenu indexé est une application logicielle,
- une étape de téléchargement d'un module logiciel (M_{L}) à ladite adresse de localisation et de déclenchement de l'exécution de ladite application logicielle au moyen dudit module logiciel.

13. Procédé de restitution d'une application logicielle selon la revendication 12, **caractérisé en ce qu'**il comprend, lorsque ledit module logiciel requiert un moteur d'exécution:
- une étape de vérification (73) d'une présence, dans l'équipement mettant en oeuvre ledit dispositif de restitution (DMR), d'un moteur d'exécution dudit module logiciel;
- une étape d'obtention (74) dudit moteur d'exécution (M_{E}) lorsque que ledit moteur d'exécution est absent.

14. Serveur de contenus multimédias (DMS), **caractérisé en ce qu'**il comprend :
- des moyens d'indexation (51), dans une base de données d'indexation de contenus, d'au moins une application logicielle en tant que contenu, par enregistrement de métadonnées indiquant que ledit contenu ainsi indexé est une application logicielle et enregistrement d'une adresse de localisation d'un module logiciel conçu pour exécuter ladite au moins une application logicielle ;
- des moyens de transmission (52) desdites métadonnées et de ladite adresse de localisation à un dispositif de pilotage (DMC), servant à sélectionner une application logicielle indexée à restituer et à piloter la restitution d'une application logicielle sélectionnée.

15. Dispositif de pilotage (DMC) conçu pour le pilotage de dispositifs de restitution, **caractérisé en ce qu'**il comprend :
- des moyens d'obtention, auprès d'un serveur de contenus multimédia, de métadonnées (M) d'au moins une application logicielle indexée dans une base de données d'indexation de contenus et d'une adresse de localisation d'au moins un fichier de données associé de ladite application logicielle indexée, depuis le serveur de contenus de la revendication 14;
- des moyens de transmission (65), à un dispositif de restitution (422) de contenus multimédia, de métadonnées (M_{AS}), de ladite adresse de localisation et d'une commande de restitution (O) de ladite application logicielle indexée, ladite commande de restitution étant destinée à déclencher une exécution de ladite application logicielle indexée au moyen d'un module logiciel encodé dans ledit fichier de données.

16. Dispositif de restitution (DMR) de contenus multimédia, **caractérisé en ce qu'**il comprend :
- des moyens de réception d'une commande de restitution (O) d'une application logicielle indexée dans une base de données d'indexation de contenus multimédia du serveur de contenus de la revendication 14, d'une adresse de localisation d'un fichier de données associé à ladite application logicielle indexée et de métadonnées de ladite application logicielle indexée,
- des moyens pour, en réponse à ladite commande de restitution, télécharger à ladite adresse de localisation un module logiciel (M_{L}) et déclencher l'exécution de ladite application logicielle au moyen dudit module logiciel.

## Patentansprüche

1. Verfahren zur Verwaltung mindestens einer Software-Anwendung (50), durchgeführt von einem Multimedia-Inhaltsserver (DMS), **dadurch gekennzeichnet, dass** es enthält:
- eine Indexierungsphase (51), in einer Inhaltsindexierungsdatenbank, mindestens einer Software-Anwendung als Inhalt, durch Speichern von Metadaten, die anzeigen, dass der so indexierte Inhalt eine Software-Anwendung ist, und Speichern einer Lokalisierungsadresse einer Datendatei, die ein Software-Modul enthält, das konzipiert ist, um die mindestens eine Software-Anwendung auszuführen;
- eine Übertragungsphase (52) der Metadaten und der Lokalisierungsadresse an eine Steuervorrichtung (DMC), die dazu dient, eine wiederzugebende indexierte Software-Anwendung auszuwählen und die Wiedergabe der ausgewählten Software-Anwendung zu steuern.

2. Verfahren nach Anspruch 1, **dadurch gekennzeichnet, dass** es eine Übertragungsphase (53) des Software-Moduls an mindestens eine Wiedergabevorrichtung von Multimedia-Inhalten (DMR) enthält, auf der die ausgewählte Software-Anwendung wiedergegeben werden soll.

3. Verwaltungsverfahren nach Anspruch 1, **dadurch gekennzeichnet, dass** die Metadaten eine Identifizierung einer Inhaltsklasse enthalten, zu der die Software-Anwendung gehört, wobei die Inhaltsklasse Inhalten eigen ist, die Software-Anwendungen sind.

4. Verfahren nach Anspruch 3, wobei der Multimedia-Inhaltsserver ein UPnP-Multimedia-Inhaltsserver ist, und die Klasse eine von der mit "*object.item*" bezeichneten UPnP-Klasse abgeleitete Klasse ist.

5. Verfahren nach Anspruch 3, wobei der Multimedia-Inhaltserver ein UPnP-Multimedia-Inhaltsserver ist, und die Klasse eine von der mit "*object.container*" bezeichneten UPnP-Klasse abgeleitete Klasse ist.

6. Verwaltungsverfahren einer Software-Anwendung nach Anspruch 1, **dadurch gekennzeichnet, dass** die Indexierungsphase einen Schritt der Bestimmung und des Speicherns mindestens eines Metadatenwerts, der für eine Lokalisierung repräsentativ ist, und/oder einer Kennung mindestens eines Multimedia-Inhalts enthält, der von der Software-Anwendung (513) bei ihrer Ausführung verwendet wird.

7. Verwaltungsverfahren einer Software-Anwendung nach Anspruch 1, **dadurch gekennzeichnet, dass** die Indexierungsphase außerdem einen Schritt der Bestimmung und des Speicherns mindestens eines Metadatenwerts, der für eine Lokalisierung repräsentativ ist, und/oder einer Kennung einer der Software-Anwendung zugeordneten Ausführungsmaschine enthält, wenn das Software-Modul von einer Ausführungsmaschine ausgeführt werden muss.

8. Verwaltungsverfahren einer Software-Anwendung nach Anspruch 1, **dadurch gekennzeichnet, dass** es außerdem eine Aktualisierungsphase (515) der Indexierungsdatenbank enthält, wenn eine neue Version der Software-Anwendung oder eine neue Software-Anwendung erfasst wird.

9. Steuerverfahren (60) einer Ausführung einer Software-Anwendung, das von einer Steuervorrichtung (DMC) durchgeführt wird, **dadurch gekennzeichnet, dass** es enthält:
- einen Schritt des Erhalts, bei einem Multimedia-Inhaltsserver, von Metadaten (M) mindestens einer Software-Anwendung, die in einer Inhaltsindexierungsdatenbank indexiert ist, und einer Lokalisierungsadresse mindestens einer Datendatei, die der gemäß dem Verfahren des Anspruchs 1 indexierten Software-Anwendung zugeordnet ist;
- einen Schritt der Übertragung (65), an eine Wiedergabevorrichtung (422) von Multimedia-Inhalten, von Metadaten (M_{AS}), der Lokalisierungsadresse und eines Wiedergabebefehls (0) der indexierten Software-Anwendung,
wobei der Wiedergabebefehl (0) dazu bestimmt ist, die Ausführung der indexierten Software-Anwendung mittels eines in der Datendatei codierten Software-Moduls zu aktivieren.

10. Steuerverfahren nach Anspruch 9, **dadurch gekennzeichnet, dass** es einen Schritt der Überprüfung der Kompatibilität der Wiedergabevorrichtung mit der indexierten Software-Anwendung ausgehend von einer Information über eine Ausführungsumgebung der Wiedergabevorrichtung (DMR) und einer für mindestens ein Peripheriegerät der Wiedergabevorrichtung (DMR) repräsentativen Information enthält.

11. Steuerverfahren nach Anspruch 10, **dadurch gekennzeichnet, dass** es enthält:
- einen ersten Schritt der Überprüfung einer Umgebungskompatibilität zwischen:
- einem für eine Ausführungsumgebung der indexierten Software-Anwendung repräsentativen Metadatenwert, und
- der mindestens einen Information über eine Ausführungsumgebung der mindestens einen Wiedergabevorrichtung (DMR),
- einen zweiten Schritt der Überprüfung einer Hardware-Kompatibilität zwischen:
- einem für von der indexierten Software-Anwendung verwendete Peripheriegeräte repräsentativen Metadatenwert;
- der mindestens einen vorab erhaltenen, für die Peripheriegeräte repräsentativen Information.

12. Wiedergabeverfahren (70) einer Software-Anwendung, durchgeführt von einer Wiedergabevorrichtung (DMR) von Multimedia-Inhalten, **dadurch gekennzeichnet, dass** es enthält:
- einen Schritt des Empfangs einer Lokalisierungsadresse, von Metadaten (M_{AS}) und eines Wiedergabebefehls (0) eines in einer Indexierungsdatenbank von Multimedia-Inhalten indexierten Inhalts, gemäß dem Verfahren des Anspruchs 1, und, als Antwort auf den Wiedergabebefehl, wenn die Metadaten anzeigen, dass der indexierte Inhalt eine Software-Anwendung ist,
- einen Schritt des Herunterladens eines Software-Moduls (M_{L}) an der Lokalisierungsadresse und des Aktivierens der Ausführung der Software-Anwendung mittels des Software-Moduls.

13. Wiedergabeverfahren einer Software-Anwendung nach Anspruch 12, **dadurch gekennzeichnet, dass** es enthält, wenn das Software-Modul eine Ausführungsmaschine erfordert:
- einen Schritt der Überprüfung (73) eines Vorhandenseins, in der die Wiedergabevorrichtung (DMR) verwendenden Ausrüstung, einer Ausführungsmaschine des Software-Moduls;
- einen Schritt des Erhalts (74) der Ausführungsmaschine (M_{E}), wenn die Ausführungsmaschine nicht vorhanden ist.

14. Multimedia-Inhaltsserver (DMS), **dadurch gekennzeichnet, dass** er enthält:
- Indexierungseinrichtungen (51), in einer Inhaltsindexierungsdatenbank, mindestens einer Software-Anwendung als Inhalt, durch Speichern von Metadaten, die anzeigen, dass der so indexierte Inhalt eine Software-Anwendung ist, und Speichern einer Lokalisierungsadresse eines Software-Moduls, das konzipiert ist, um die mindestens eine Software-Anwendung auszuführen;
- Übertragungseinrichtungen (52) der Metadaten und der Lokalisierungsadresse an eine Steuervorrichtung (DMC), die dazu dient, eine wiederzugebende indexierte Software-Anwendung auszuwählen und die Wiedergabe einer ausgewählten Software-Anwendung zu steuern.

15. Steuervorrichtung (DMC), die für die Steuerung von Wiedergabevorrichtungen konzipiert ist, **dadurch gekennzeichnet, dass** sie enthält:
- Einrichtungen zum Erhalt, bei einem Multimedia-Inhaltsserver, von Metadaten (M) mindestens einer in einer Inhaltsindexierungsdatenbank indexierten Software-Anwendung und einer Lokalisierungsadresse mindestens einer der indexierten Software-Anwendung zugeordneten Datendatei, ausgehend vom Inhaltsserver des Anspruchs 14;
- Übertragungseinrichtungen (65), an eine Wiedergabevorrichtung (422) von Multimedia-Inhalten, von Metadaten (M_{AS}), der Lokalisierungsadresse und eines Wiedergabebefehls (0) der indexierten Software-Anwendung, wobei der Wiedergabebefehl dazu bestimmt ist, eine Ausführung der indexierten Software-Anwendung mittels eines in der Datendatei codierten Software-Moduls zu aktivieren.

16. Wiedergabevorrichtung (DMR) von Multimedia-Inhalten, **dadurch gekennzeichnet, dass** sie enthält:
- Einrichtungen zum Empfang eines Wiedergabebefehls (0) einer in einer Indexierungsdatenbank von Multimedia-Inhalten des Inhaltsservers des Anspruchs 14 indexierten Software-Anwendung, einer Lokalisierungsadresse einer der indexierten Software-Anwendung zugeordneten Datendatei, und von Metadaten der indexierten Software-Anwendung,
- Einrichtungen, um als Antwort auf den Wiedergabebefehl an die Lokalisierungsadresse ein Software-Modul (M_{L}) herunterzuladen und die Ausführung der Software-Anwendung mittels des Software-Moduls zu aktivieren.

## Claims

1. Method, implemented by a multimedia contents server (DMS), for managing at least one software application (50), **characterized in that** it comprises:
- an indexation phase (51), in an indexing contents database, of at least one software application as content, by recording metadata indicating that said content thus indexed is a software application and recording a location address of a data file comprising a software module designed to execute said at least one software application;
- a transmission phase (52) of said metadata and of said location address to a control device (DMC), serving to select an indexed software application to be rendered and to control the rendering of the selected software application.

2. Method according to Claim 1, **characterized in that** it comprises a phase of transmission (53) of said software module, to at least one multimedia contents rendering device (DMR) on which the selected software application is to be rendered.

3. Management method according to Claim 1, **characterized in that** said metadata comprise an identification of a contents class to which said software application belongs, said contents class being specific to contents which are software applications.

4. Method according to Claim 3, in which the multimedia contents server is a UPnP multimedia contents server and said class is a class derived from the UPnP class named *"object.item".*

5. Method according to Claim 3, in which the multimedia contents server is a UPnP multimedia contents server and said class is a class derived from the UPnP class named *"object.container".*

6. Method for managing a software application according to Claim 1, **characterized in that** said indexation phase comprises a step of determining and recording at least one metadatum representative of a location and/or an identifier of at least one multimedia content used by said software application (513) during its execution.

7. Method for managing a software application according to Claim 1, **characterized in that** said indexation phase furthermore comprises a step of determining and recording at least one metadatum representative of a location and/or an identifier of an execution engine associated with said software application, when said software module requires to be executed by an execution engine.

8. Method for managing a software application according to Claim 1, **characterized in that** it furthermore comprises a phase of updating (515) of said indexation database when a new software application version, or a new software application is detected.

9. Method for controlling (60), implemented by a control device (DMC), a software application execution , **characterized in that** it comprises:
- an obtaining step, from a multimedia contents server, metadata (M) of at least one software application indexed in a database for indexing contents and a location address of at least one data file associated with said software application indexed according to the method of Claim 1;
- a step (65) of transmitting, to a multimedia contents rendering device (422), metadata (M_{AS}), said location address and a rendering command (0) in respect of the indexed software application,
said rendering command (0) being intended to trigger the execution of said indexed software application by means of a software module encoded in said data file.

10. Control method according to Claim 9, **characterized in that** it comprises a step of verifying the compatibility of the rendering device with said indexed software application, on the basis of an information item on an execution environment of said rendering device (DMR) and of an information item representative of at least one peripheral of said rendering device (DMR).

11. Control method according to Claim 10, **characterized in that** it comprises:
- a first step of verifying an environmental compatibility between:
- a metadatum representative of an execution environment of said indexed software application, and
- said at least one information item on an execution environment of said at least one rendering device (DMR),
- a second step of verifying a hardware compatibility between:
- a metadatum representative of peripherals used by said indexed software application;
- said at least one previously obtained information item representative of the peripherals.

12. Method of rendering (70), implemented by a multimedia contents rendering device (DMR), of a software application, **characterized in that** it comprises:
- a step of receiving a location address, metadata (M_{AS}) and a rendering command (0) in respect of a content indexed in a database for indexing multimedia contents, according to the method of Claim 1, and, in response to said rendering command, when said metadata indicate that the indexed content is a software application,
- a step of downloading a software module (M_{L}) at said location address and of triggering the execution of said software application by means of said software module.

13. Method of rendering of a software application according to Claim 12, **characterized in that** it comprises, when said software module requests an execution engine:
- a step (73) of verifying a presence, in the equipment item implementing said rendering device (DMR), of an execution engine in respect of said software module;
- a step (74) of obtaining said execution engine (M_{E}) when said execution engine is absent.

14. Multimedia contents server (DMS), **characterized in that** it comprises:
- means (51) for indexing, in a database for indexing contents, at least one software application in the guise of content, by recording metadata indicating that said content thus indexed is a software application and by recording a location address of a software module designed to execute said at least one software application;
- means (52) for transmitting said metadata and said location address to a control device (DMC), serving to select an indexed software application to be rendered and to control the rendering of a selected software application.

15. Control device (DMC) designed for the control of rendering devices, **characterized in that** it comprises:
- means for obtaining, from a multimedia contents server, metadata (M) of at least one software application indexed in a database for indexing contents and a location address of at least one data file associated with said indexed software application, from the contents server of Claim 14;
- means (65) for transmitting, to a multimedia contents rendering device (422), metadata (M_{AS}), said location address and a rendering command (0) in respect of said indexed software application, said rendering command being intended to trigger an execution of said indexed software application by means of a software module encoded in said data file.

16. Multimedia contents rendering device (DMR), **characterized in that** it comprises:
- means for receiving a rendering command (0) in respect of a software application indexed in a database for indexing multimedia contents of the contents server of Claim 14, a location address of a data file associated with said indexed software application and metadata of said indexed software application,
- means for, in response to said rendering command, downloading at said location address a software module (M_{L}) and triggering the execution of said software application by means of said software module.
